# EUROPÄISCHE PATENTANMELDUNG

(11) **EP 4 335 676 A1**
(43) Veröffentlichungstag der Anmeldung: **13.03.2024**
(21) Anmeldenummer: 22194949.8
(22) Anmeldetag: 09.09.2022
(51) Int. Cl.: B60J 7/16, B60P 3/38

(54) **AUFSTELLDACH FÜR EIN FAHRZEUG ODER EINEN ANHÄNGER**

(71) Anmelder: Yellow Sphere Innovations GmbH, 50679 Köln (DE)
(72) Erfinder: Christ, Alexander, 50679 Köln (DE)
(74) Vertreter: Bals & Vogel Patentanwälte PartGmbB

(57) **Zusammenfassung**

Die vorliegende Erfindung betrifft ein Aufstelldach (1) für ein Fahrzeug (100) oder einen Anhänger, insbesondere für ein Wohnmobil oder einen Campingwagen. Weiterhin betrifft die Erfindung ein Fahrzeug oder einen Anhänger, insbesondere ein Wohnmobil oder einen Campingwagen mit einem derartigen Aufstelldach. Ferner betrifft die Erfindung ein Verfahren zur Benutzung, insbesondere zum Aufbau und/oder Abbau, eines Aufstelldachs (1) für ein Fahrzeug oder einen Anhänger, insbesondere für ein Wohnmobil oder einen Campingwagen.

## Beschreibung

Die vorliegende Erfindung betrifft ein Aufstelldach für ein Fahrzeug oder einen Anhänger, insbesondere für ein Wohnmobil oder einen Campingwagen. Weiterhin betrifft die Erfindung ein Fahrzeug oder einen Anhänger, insbesondere ein Wohnmobil oder einen Campingwagen mit einem derartigen Aufstelldach. Ferner betrifft die Erfindung ein Verfahren zur Benutzung, insbesondere zum Aufbau und/oder Abbau, eines Aufstelldachs für ein Fahrzeug oder einen Anhänger, insbesondere für ein Wohnmobil oder einen Campingwagen.

Aus dem Stand der Technik sind Aufstelldächer für Fahrzeuge oder Anhänger bekannt, welche beispielsweise manuell durch einen Aufbau des Aufstelldachs von einem Fahrmodus, beispielsweise für die Fahrt auf der Straße, in einen Schlafmodus, beispielsweise bei einer Übernachtung auf einem Campingplatz, bringbar sind oder umgekehrt durch einen Abbau des Aufstelldachs von einem Schlafmodus in einen Fahrmodus.

Bei diesen Aufstelldächern besteht jedoch zumindest einer der folgenden Nachteile. Einige der bekannten Aufstelldächer erfordern eine manuelle Betätigung. Zudem können mechanische Bauteile einen erschwerten und fehleranfälligen Aufbau und Abbau, einen erhöhten Wartungsbedarf, erhöhten Verschleiß und eine komplizierte Montage und Wartung aufweisen. Die bekannten Aufstelldächer weisen zudem eine unerwünscht große Bauhöhe, insbesondere im Fahrmodus, auf, was den Luftwiderstand des Fahrzeugs und damit den Kraftstoffverbrauch erhöht. Oft sind die bekannten Aufstelldächer auch umweltschädlich aufgrund der benötigten Werkstoffe, insbesondere Metallen, und/oder der notwendigen Schmierstoffe. Zudem bieten viele der bekannten Aufstelldächer einen unzureichenden Komfort bei der Verwendung als Schlafgelegenheit. Weiterhin kann der Schutz vor äußeren Umwelteinflüssen, wie Wind, Regen, Sonneneinstrahlung unzureichend sein. Außerdem ist der Schlafkomfort in bzw. unter einem solchen Aufstelldach unzureichend, da häufig eine Federung der Schlafunterlage unzureichend ist.

Die Aufgabe der vorliegenden Erfindung ist es, die voranstehend beschriebenen Nachteile zumindest teilweise zu beheben. Insbesondere ist eine Aufgabe der vorliegenden Erfindung, ein optimiertes Aufstelldach zur Verfügung zu stellen, welches vorzugsweise einen einfachen, reversiblen Aufbau und Abbau ermöglicht und zudem wartungsarm und umweltfreundlich ist. Zudem kann es eine Aufgabe sein, eine möglichst geringe Bauhöhe eines Aufstelldachs bzw. eines Fahrzeugs mit Aufstelldach zu erzielen. Weiterhin soll vorzugsweise eine möglichst komfortable Schlafmöglichkeit in dem Aufstelldach zur Verfügung gestellt werden.

Die voranstehende Aufgabe wird gelöst durch ein Aufstelldach für ein Fahrzeug und ein Fahrzeug mit einem derartigen Aufstelldach sowie ein Verfahren zur Benutzung eines Aufstelldachs gemäß den unabhängigen Ansprüchen. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Aufstelldach beschrieben sind, selbstverständlich auch im Zusammenhang mit dem erfindungsgemäßen Fahrzeug, und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Es kann im Rahmen der Erfindung vorgesehen sein, Bezug zu nehmen auf ein Koordinatensystem, insbesondere umfassend eine x-, y-, und z-Achse, welche insbesondere als Rechthandsystem ausgeführt sein können. Dabei kann die x-Achse im Wesentlichen parallel zur Fahrtrichtung des Fahrzeugs oder Anhängers ausgerichtet sein (vorne/hinten), die y-Achse im Wesentlichen senkrecht zur Fahrtrichtung (links/rechts) und die z-Achse im Wesentlichen senkrecht jeweils zur x-Achse und zur y-Achse (oben/unten). Zudem kann es im Rahmen der Erfindung vorgesehen sein, dass sich die Begriffe vorne, links, rechts und hinten jeweils auf die Fahrtrichtung eines Fahrzeugs oder eines Anhängers, insbesondere eines Wohnmobils oder eines Campingwagens beziehen. Im Rahmen der Erfindung kann unter einem Fahrzeug auch ein Anhänger verstanden werden.

Die Erfindung betrifft ein Aufstelldach für ein Fahrzeug oder einen Anhänger, insbesondere für ein Wohnmobil oder einen Campingwagen. Dabei umfasst das Aufstelldach einen Boden, und zumindest drei an dem Boden anordbare Wände, sowie eine Decke, welche an den zumindest drei Wänden anordbar ist. Das Aufstelldach ist reversibel durch ein Antriebsmittel zumindest teilweise von einem Fahrmodus in einen Schlafmodus und umgekehrt von dem Fahrmodus in den Schlafmodus bringbar. Im Schlafmodus bilden die Decke, der Boden und die zumindest drei Wände ein innenliegendes Schlafraumvolumen, welches einen Innenraum des Fahrzeugs oder Anhängers erweitert, vorteilhafterweise um Raum für eine Schlafgelegenheit wie ein Bett für zumindest eine Person zur Verfügung zu stellen. Im Fahrmodus grenzen die Decke und der Boden im Wesentlichen aneinander um die Bauhöhe des Aufstelldachs zu minimieren.

Im Schlafmodus kann das Aufstelldach mit anderen Worten als eine voluminöse Ausbuchtung ausgestaltet sein, ähnlich einer Kiste, um ein innenliegendes Schlafraumvolumen zur Verfügung zu stellen, wodurch das Aufstelldach beispielsweise in Form eines Dachzelts auf einem Fahrzeug nutzbar ist. Dadurch kann das Innenvolumen des Fahrzeugs oder Anhängers, in welchem sich Personen frei bewegen können, vergrößert werden um eine Schlafgelegenheit in dem innenliegenden Schlafraumvolumen, beispielsweise für ein Bett. Dabei können die zumindest drei Wände aneinander angeordneten Seitenwänden entsprechen, vorzugsweise mit einer vorderen, einer (in Fahrtrichtung) linken und einer (in Fahrtrichtung) rechten Wand, wobei das Aufstelldach vorzugsweise in Seitenansicht im Schlafmodus eine dreieckige Form aufweist, wobei das Aufstelldach vorne höher ist als hinten. Es kann auch vorgesehen sein, dass das Aufstelldach anstelle der vorderen Wand eine hintere Wand aufweist, wobei das Aufstelldach vorzugsweise in Seitenansicht eine dreieckige Form aufweist, wobei das Aufstelldach im Schlafmodus hinten höher ist als vorne, was den Luftwiderstand bei einer Fahrt mit einem Aufstelldach im Schlafmodus reduzieren kann. Auch ist es denkbar, dass das Aufstelldach eine vordere, linke, rechte und hintere Wand aufweist, und diese somit im Schlafmodus zusammen mit der Decke im Wesentlichen einen Quader bilden. Hierdurch kann ein besonders großes innenliegendes Schlafraumvolumen ermöglicht werden. Die Verwendung von drei Wänden kann eine reduzierte Materialverwendung ermöglichen. Vorzugsweise können benachbarte Wände im Schlafmodus im Wesentlichen rechtwinklig aneinander anordbar sein, um vorzugsweise eine besonders hohe Stabilität des Aufstelldachs zu erzielen. Im Schlafmodus ist das Aufstelldach vorzugsweise über den Innenraum des Fahrzeugs oder Anhängers erreichbar, insbesondere über eine Öffnung in dessen Dach, durch welche eine Person das innenliegende Schlafraumvolumen, welches durch das Aufstelldach begrenzt wird betreten kann. Die zumindest drei Wände sind vorzugsweise zumindest teilweise faltbar und im Wesentlichen an der Unterseite der Decke nahe dem Rand sowie an dem Dach des Fahrzeugs oder Anhängers befestigt, um eine möglichst robuste Verbindung herzustellen. Dabei kann eine Befestigung an dem Dach vorzugsweise an der nach oben weisenden Seite des Dachs erfolgen, insbesondere im Wesentlichen unterhalb des Rands der Decke.

Im Rahmen der Erfindung entspricht das Dach des Fahrzeugs oder Anhängers im Wesentlichen dessen oberer Begrenzung. Insbesondere kann das Dach im Wesentlichen planar ausgeführt sein, wie es beispielsweise bei Wohnmobilen und Campingwagen der Fall sein kann. Vorzugsweise ist das Aufstelldach im Wesentlichen oberhalb des Dachs anordbar, insbesondere im Schlafmodus. Somit kann die Dachfläche praktisch ausgenutzt werden. Im Fahrmodus kann das Aufstelldach ebenfalls oberhalb des Dachs anordbar sein, wodurch dieses immer mittransportiert werden kann und jederzeit verfügbar ist. Es kann auch vorgesehen sein, dass im Fahrmodus das Aufstelldach oder Teile des Aufstelldachs zumindest teilweise im Innenraum des Fahrzeugs unterbringbar sind, um die Bauhöhe des Aufstelldachs und die Höhe des Fahrzeugs weiter zu reduzieren. Dies kann insbesondere den ersten, zweiten und/oder dritten Hohlkörper, Anschlussstutzen, Mediumszufuhrvorrichtung und/oder zumindest eine der Wände betreffen.

Im Rahmen der Erfindung kann unter dem Boden des Aufstelldachs im Wesentlichen die Fläche verstanden werden, welche sich unmittelbar oberhalb des Dachs eines Fahrzeugs oder Anhängers befindet, insbesondere auch dann, wenn an dieser Stelle das Dach zumindest teilweise unterbrochen ist, beispielsweise aufgrund einer Öffnung, welche als Durchgang dient. Der Boden kann das Aufstelldach nach unten begrenzen. Somit kann insbesondere im Schlafmodus zwischen dem Boden, den zumindest drei Wänden und der Decke ein innenliegendes Schlafraumvolumen entstehen. Es kann vorgesehen sein, dass der Boden, die zumindest drei Wände und die Decke einen abschließbaren Raum bilden, welcher insbesondere im Schlafmodus wie ein Insektenschutz wirkt. Auch kann es vorgesehen sein, dass unterhalb der Decke die Wände stoffschlüssig verbunden sind, wodurch ein im Wesentlichen zusammenhängender Insektenschutz entsteht. Die zumindest drei Wände können zumindest einen reversibel verschließbaren Lüftungsschlitz aufweisen, um eine Sauerstoffzufuhr von außen zu ermöglichen.

Die Decke des Aufstelldachs weist eine flache längserstreckte Form auf und entspricht im einfachsten Fall vorzugsweise einer im Wesentlichen rechteckigen Platte mit vier Ecken, welche die Form des Aufstelldachs zumindest teilweise vorgibt. Die Decke des Aufstelldachs ist vorzugsweise rigide. Mit anderen Worten handelt es sich dabei um einen beweglichen Deckel für das Aufstelldach. Die Decke weist beispielsweise einen widerstandsfähigen Kunststoff auf, um ein möglichst geringes Gewicht zu erzielen. Alternativ oder zusätzlich kann die Decke ein Metall wie Aluminium aufweisen, um eine erhöhte Stabilität zu erzielen. Die Decke kann an zumindest einem Ende über zumindest ein Scharnier an dem Dach des Fahrzeugs verschwenkbar sein, wodurch eine besonders gute Führung beim Aufbau und Abbau des Aufstelldachs erzielt wird. Beispielsweise kann die Decke hinten oder vorne über zumindest ein Scharnier an dem Dach des Fahrzeugs verschwenkbar sein, während das Aufstelldach genau drei Wände an den anderen Seiten des Aufstelldachs aufweist. Es kann auch vorgesehen sein, dass die Decke im Wesentlichen aus einem vierten Hohlkörper besteht, der vorzugsweise über einen vierten Anschlussstutzen reversibel mit einem Medium befüllt werden kann, insbesondere wie unten für die anderen Hohlkörper beschrieben. Vorzugsweise weist die Decke an der Unterseite am äußersten Rand ein Dichtmittel auf, welches sich vorteilhafterweise über den gesamten Umfang erstreckt. Beispielsweise kann es sich hierbei um eine schlauchförmige Gummidichtung handeln.

Im Fahrmodus liegt die Decke des Aufstelldachs vorzugsweise im Wesentlichen plan auf dem Dach des Fahrzeugs auf. Mit anderen Worten grenzen die Decke und der Boden im Wesentlichen aneinander bzw. befinden sich in minimalem Abstand zueinander. Dies kann allerdings auch bedeuten, dass Bestandteile des Aufstelldachs zwischen der Decke und dem Dach positioniert sind, und somit die Decke und das Dach sich zueinander im minimierten Abstand befinden, beispielsweise kann sich dazwischen noch der erste, zweite und/oder dritte Hohlkörper befinden, welche im weiteren Verlauf beschrieben werden. Somit wird eine Bauhöhe des Aufstelldachs im Fahrmodus minimiert, insbesondere im Vergleich zu dem Schlafmodus, in welchem das Aufstelldach aufgebaut ist. Dadurch kann auch die Gesamthöhe des Fahrzeugs oder Anhängers minimiert werden. Somit kann der Luftwiderstand des Fahrzeugs während der Fahrt minimiert werden um Kraftstoff zu sparen und optimierte Fahreigenschaften zu erzielen. Weiterhin kann das Fahrzeug somit auch niedrige Unterführungen bei der Fahrt befahren und/oder Garagen und dergleichen mit geringer Bauhöhe nutzen. Im Fahrmodus kann die Decke über das Dichtmittel gegen das Dach des Fahrzeugs abdichten, um den Innenraum des Fahrzeugs mediumdicht zu verschließen, insbesondere um vor äußeren Umwelteinflüssen wie Regen, Wind, Sonneneinstrahlung und/oder Tieren abzuschotten. Dabei können die zumindest drei Wände, der erste, zweite und/oder dritte Hohlkörper vollständig innerhalb des Aufstelldachs aufgenommen werden, vorzugsweise vollständig abgeschirmt durch das Dichtmittel. Es kann vorgesehen sein, das Aufstelldach im Fahrmodus über zumindest ein Fixiermittel, wie beispielsweise eine handbetätigbare Klemme, zu fixieren, um eine reversibel lösbare Verbindung zu dem Dach des Fahrzeugs herzustellen, wodurch das Aufstelldach nicht während einer Fahrt unerwartet aufgefaltet wird und Schaden nimmt oder ein Sicherheitsrisiko darstellt. Vorzugsweise befindet sich das zumindest eine Fixiermittel an der Decke, welche vom Innenraum des Fahrzeugs montierbar sind, wodurch nach einem Abbau des Aufstelldachs kein Betreten des Dachs zur Fixierung notwendig ist. Im Fahrmodus kann das innenliegenden Schlafraumvolumen des Aufstelldachs im Wesentlichen nicht vorhanden sein bzw. gleich null sein.

Durch einen Aufbau des Aufstelldachs ist ein zumindest teilweiser, vorzugsweise vollständiger, reversibler Wechsel von dem Fahrmodus in den Schlafmodus möglich. Hierbei wird ein im weiteren Verlauf beschriebenes erfindungsgemäßes Antriebsmittel verwendet. Dabei kann das von den zumindest drei Wänden und der Decke umschlossene innenliegende Schlafraumvolumen des Aufstelldachs im Wesentlichen kontinuierlich vergrößert werden, indem das Aufstelldach aufgebaut wird. Dabei werden die anfänglich zusammengefalteten zumindest drei Wände aufgrund ihrer Befestigung an dem Dach und an der Decke aufgefaltet. Der Abstand zwischen dem Boden und der Decke kann dabei kontinuierlich erhöht werden. Wenn der Aufbau vollständig abgeschlossen ist, befindet sich das Aufstelldach im Schlafmodus, und das innenliegende Schlafraumvolumen ist maximiert, wodurch ein optimaler Schlafkomfort gewährleistet wird. Dabei können die zumindest drei Wände im Wesentlichen vollständig entfaltet sein, wodurch sich kein Wasser oder Feststoffe wie Äste und Schmutz an den Wänden oder in Falten der Wände ansammeln kann. Es ist auch denkbar, das Aufstelldach aufgrund von Platzmangel, beispielsweise aufgrund eines darüber befindlichen Baums, nur teilweise aufzubauen, also nur teilweise in den Schlafmodus zu überführen, wodurch sich weniger Angriffsfläche bei starkem Wind ergibt um die Sicherheit zu erhöhen und vorzugsweise das innenliegende Schlafraumvolumen dennoch ausreicht um einer Person Platz zum Schlafen zur Verfügung zu stellen.

Gemäß einem weiteren Aspekt der vorliegenden Erfindung kann es vorgesehen sein, dass das Aufstelldach einen Lattenrost aufweist, welcher im Fahrmodus im Wesentlichen parallel zum Boden in einer Fahrhöhe im Wesentlichen nahe dem Boden positionierbar ist und im Schlafmodus im Wesentlichen parallel beabstandet vom Boden oberhalb des Bodens in einer Schlafhöhe positionierbar ist. Dabei kann die Schlafhöhe zwischen der Fahrhöhe und einer maximalen Lattenrosthöhe durch einen ersten Hohlkörper einstellbar sein. Der erste Hohlkörper kann im Wesentlichen mediumdicht verschlossen sein. Das Volumen des ersten Hohlkörpers kann reversibel verkleinert und vergrößert werden, indem ein erstes Medium, vorzugsweise Luft, über einen am ersten Hohlkörper anordbaren ersten Anschlussstutzen zur Vergrößerung des Volumens (mit anderen Worten Ausdehnung) durch eine erste Mediumzuführvorrichtung, insbesondere eine Pumpe, in den ersten Hohlkörper eingeführt werden kann, wodurch der Lattenrost nach oben anhebbbar ist und zur Verkleinerung des Volumens (mit anderen Worten Zusammenfaltung) durch die erste Mediumzuführvorrichtung dem ersten Hohlkörper entzogen werden kann, wodurch der Lattenrost nach unten absenkbar ist. Dabei kann der erste Hohlkörper zumindest abschnittsweise zwischen dem Rand des Lattenrosts und dem Dach des Fahrzeugs oder Anhängers anordbar sein.

Im Rahmen der vorliegenden Erfindung, kann unter einem ersten Hohlkörper ein im Wesentlichen längserstreckter, idealerweise zumindest teilweise flexibler, Schlauch verstanden werden, welcher bevorzugt aufblasbar ist durch ein erstes Medium wie Luft und/oder Wasser.

Der erste Hohlkörper kann auf dem Dach des Fahrzeugs anordbar sein, insbesondere durch eine reversibel lösbare Befestigung beispielsweise durch eine Kederverbindung. Dies ermöglicht eine einfache Montage und Wartung. Vorzugsweise befindet sich der erste Hohlkörper im Fahrmodus vollständig unterhalb der Decke. Es kann vorgesehen sein, dass der erste Hohlkörper im Wesentlichen ein Rechteck oder eine U-förmige Struktur bildet, insbesondere in Draufsicht von oben auf das Dach des Fahrzeugs oder Anhängers. Somit ergibt sich ein zusammenhängender erster Hohlkörper, der insbesondere über einen einzigen ersten Anschlussstutzen befüllbar ist.

Bei dem Lattenrost kann es sich im einfachsten Fall um ein Brett handeln, auf welchem bevorzugt eine Matratze positionierbar ist. Der Lattenrost kann im Wesentlichen auf dem ersten (und/oder zweiten) Hohlkörper anordbar sein, insbesondere durch eine reversible lösbare Befestigung, wie eine Clipsverbindung oder einen Klettverschluss. Dadurch kann jederzeit der Lattenrost montiert oder demontiert werden, insbesondere können einzelne Latten getauscht oder verschoben werden. Der Lattenrost kann zumindest eine Latte aufweisen, vorzugsweise eine Vielzahl von Latten, welche sich im Wesentlichen senkrecht zur Fahrtrichtung erstreckt. Zudem kann der Lattenrost zumindest eine, vorzugsweise zwei, sich in Fahrtrichtung erstreckende Balken aufweisen, welche vorzugsweise mittig und/oder links und rechts in Fahrtrichtung an dem Lattenrost anordbar sind und an der zumindest einen Latte befestigt sind. Dabei können die Balken im Wesentlichen parallel zueinander anordbar sein. Vorzugsweise wird die zumindest eine Latte dabei im Wesentlichen senkrecht auf dem Balken angeordnet, wobei insbesondere mehrere Latten im Wesentlichen parallel zueinander anordbar sind, und damit senkrecht zu den Balken. Mit anderen Worten kann sich so eine für normale Betten bekannte Ausführung eines Lattenrosts ergeben, bei welchem zwei Balken in Fahrtrichtung links und rechts parallel zueinander angeordnet sind, und zumindest eine Latte im Wesentlichen senkrecht dazu mit weiteren Latten eine Auflagefläche z.B. für eine Matratze bildet. Durch den Lattenrost bzw. die zumindest eine Latte kann somit der Schlafkomfort verbessert werden. Es ist auch denkbar, dass die zumindest eine Latte, mit beiden Enden direkt in den ersten (und/oder zweiten) Hohlkörper zumindest teilweise einführbar ist, und durch das Vergrößern des Volumens des ersten Hohlkörpers auf diese Weise gehalten wird. Somit ergibt sich eine besonders einfache Montage.

Im Rahmen der vorliegenden Erfindung kann mediumdicht insbesondere wasserdicht und/oder luftdicht bedeuten. Mit anderen Worten kann es vorteilhaft sein, wenn durch das Material des ersten, zweiten und/oder dritten Hohlkörpers, insbesondere im geschlossenen Zustand (bzw. Anschlussstutzen abgedichtet), im Wesentlichen kein Medium dringen kann, insbesondere kein Gas wie Luft und/oder keine Flüssigkeit wie Wasser und/oder keine Feststoffe wie Schmutz, Staub und dergleichen. Mit anderen Worten ist eine Dichtigkeit gegeben, insbesondere wenn ein entsprechender Anschlussstutzen geschlossen ist, wobei vorzugsweise bei einem offenen Anschlussstutzen, ein Austausch lediglich über den Anschlussstutzen erfolgt.

Im Rahmen der vorliegenden Erfindung kann ein Medium, insbesondere ein erstes, zweites und/oder drittes Medium, ein Gas, vorzugsweise Luft, sein, alterativ oder zusätzlich aber auch eine Flüssigkeit, insbesondere Wasser. Gase können dabei den Vorteil eines geringen Gewichts bieten. Luft kann vorteilhaft sein, da es im Wesentlichen überall verfügbar ist und/oder wenig Verunreinigungen hinterlassen kann. Flüssigkeiten können vorteilhaft sein um Wärme zu speichern und/oder abzugeben. Es ist im Rahmen der vorliegenden Erfindung denkbar, dass das Medium in dem ersten, zweiten und/oder dritten Hohlkörper verwendet wird zur Isolation und/oder zur Heizung bzw. Kühlung. Beispielsweise kann das erste, zweite und/oder dritte Medium im Sommer tagsüber erwärmt werden durch die Außentemperatur und/oder Sonneneinstrahlung und abends oder nachts als Heizung fungieren, wenn die Wärme kontinuierlich abgegeben wird. Alternativ oder zusätzlich kann es vorgesehen sein, das erste, zweite und/oder dritte Medium zu verwenden als Druckluft und/oder Verbrauchswasser, beispielsweise zum Duschen, was den Vorteil von über den Tag erwärmten Wasser bieten kann, mit anderen Worten eine umweltfreundliche Campingdusche, wobei insbesondere durch die erhöhte Lagerung auf dem Dach, das Wasser auf einfache Art und Weise über einen Schlauch entnehmbar ist. Es kann vorgesehen sein, im ersten, zweiten und dritten Hohlkörper jeweils das gleiche Medium zu verwenden, vorzugsweise Luft oder Wasser.

Unter einer Mediumzuführvorrichtung, insbesondere einer ersten, zweiten und/oder dritten Mediumszuführvorrichtung, kann im Rahmen der Erfindung ein Mittel zur verstanden werden welches in der Lage ist einem Hohlkörper ein Medium, insbesondere erstes, zweites und/oder drittes Medium zuzuführen oder zu entziehen. Im einfachsten Fall kann es sich dabei um eine Pumpe, wie beispielsweise eine Luftpumpe oder eine Wasserpumpe handeln. Auch eine Flüssig/Gaspumpe, welche ein Gemisch aus Flüssigkeiten wie Wasser und Gasen wie Luft fördern kann, ist denkbar. Es kann sich dabei um eine mechanisch betätigbare Pumpe handeln, was kostengünstig und umweltfreundlich ist. Weiterhin kann es sich auch um eine automatische Pumpe handeln, welche vorzugsweise über das Bordnetz des Fahrzeugs oder Anhängers versorgt wird und vorteilhafterweise im Fahrzeug oder Anhänger integriert ist. Dabei kann es sich auch um eine mit Druck (z.B. Wasserdruck oder Luftdruck) beaufschlagte Pumpe handeln, welche in der Lage ist einen Hohlkörper, insbesondere einen ersten, zweiten und/oder dritten Hohlkörper mit Überdruck, vorzugsweise über dem Atmosphährendruck, zu befüllen bzw. diesen zu entleeren auch wenn dieser unter Druck steht. Somit ergibt sich der Vorteil einer besonders rigiden Ausgestaltung des entsprechenden Hohlkörpers, ähnlich einem besonders stark aufgepumpten Fahrradreifen. Besonders bevorzugt kann es sein, wenn lediglich eine einzige Mediumszuführvorrichtung vorgesehen ist, um den ersten, zweiten und/oder dritten Hohlkörper jeweils ein Medium, vorzugsweise Luft, zuzuführen oder zu entziehen. Dies kann den Vorteil bieten, Gewicht und/oder Kosten zu sparen, sowie die Handhabung, Wartung und Montage zu vereinfachen, wobei insbesondere Luft überall verfügbar ist.

Die erste Mediumzuführvorrichtung kann im Wesentlichen das Volumen und/oder den Druck innerhalb des ersten Hohlkörpers einstellen, indem dem ersten Hohlkörper das erste Medium zumindest teilweise zugeführt wird (Druck und/oder Volumenerhöhung) und indem das Medium dem ersten Hohlkörper zumindest teilweise entzogen wird. Somit kann über das Volumen des ersten Hohlkörpers im Wesentlichen die Liegehöhe des Lattenrosts eingestellt werden. Weiterhin kann über den Druck des Mediums innerhalb des ersten Hohlkörpers im Wesentlichen bestimmt werden, wie hart bzw. federnd der Lattenrost auf dem ersten Hohlkörper gelagert sein soll. Der erste Hohlkörper kann im Fahrmodus im Wesentlichen evakuiert sein. Mit anderen Worten befindet sich sehr wenig oder idealerweise gar kein erstes Medium innerhalb des ersten Hohlkörpers. Dadurch befindet sich der auf dem ersten Hohlkörper angeordnete Lattenrost in der Fahrhöhe, insbesondere in der am niedrigsten einstellbaren Höhe des Lattenrosts, unmittelbar oberhalb des Bodens. Somit wird die Bauhöhe des Aufstelldachs minimiert. Idealerweise befindet sich der Lattenrost im Wesentlichen parallel über dem Boden bzw. über dem Dach. Somit kann einerseits die Bauhöhe minimiert werden. Andererseits kann der Lattenrost so im Wesentlichen automatisch waagrecht positioniert werden, insbesondere wenn das Fahrzeug und der darunter befindliche Untergrund im Wesentlichen waagrecht angeordnet sind. Der erste Hohlkörper kann zumindest teilweise oder vollständig durch das Medium gefüllt werden. Somit ist die Höhe des Lattenrosts einstellbar. Wenn der erste Hohlkörper, vorzugsweise im Schlafmodus, vollständig von dem Medium gefüllt ist, und vorzugsweise sogar mit Überdruck befüllt ist, befindet sich der Lattenrost in der maximal einstellbaren Höhe. Dies kann den Schlafkomfort einer auf dem Lattenrost nächtigenden Person optimieren, insbesondere da so eine Liegehärte ähnlich einem herkömmlichen Bett einstellbar ist. Es kann auch vorgesehen sein, den ersten Hohlkörper nur teilweise mit einem Medium zu befüllen. Dies kann vorteilhaft sein um den Lattenrost in einer Schlafhöhe zu positionieren, welche zwischen der maximalen Lattenrosthöhe und der Fahrhöhe liegt. Zudem ermöglicht dies, den Lattenrost aufgrund des geringeren Drucks des ersten Hohlköpers weicher zu lagern, insbesondere um ein Schlafgefühl ähnlich einem Wasserbett oder einer Luftmatratze zu erzielen. Dies kann zusätzlich zur Einsparung des Volumens des Mediums führen und zu einem reduzierten Energiebedarf sowie erforderlicher Füllzeit bei der Befüllung.

Es kann vorgesehen sein, dass der erste Hohlkörper zumindest zwei Kammern aufweist, welche insbesondere abschnittsweise entlang dem Rand des Lattenrosts und dem Dach des Fahrzeugs anordbar sind, vorzugsweise rechts und links in Fahrtrichtung, vorteilhafterweise um Ausgleich zu gewährleisten zwischen einer ersten schwereren Person und einer zweiten leichteren Person, welche parallel zur Fahrtrichtung in dem Aufstelldach auf dem Lattenrost positionierbar sind, insbesondere nächtigen, wobei insbesondere der Druck des Mediums in der Kammer auf der Seite der schwereren Person höher ist um eine im Wesentlichen horizontale Ausrichtung des Lattenrosts zu ermöglichen. Alternativ oder zusätzlich kann vorgesehen sein, dass der erste Hohlkörper zumindest zwei Kammern aufweist, welche insbesondere abschnittsweise entlang dem Rand des Lattenrosts und dem Dach des Fahrzeugs anordbar sind, vorzugsweise in Fahrtrichtung weiter vorne (Richtung Front des Fahrzeugs) und hinten (Heck des Fahrzeugs), um Ausgleich zu gewährleisten zwischen einer ersten schwereren Person und einer zweiten leichteren Person, welche senkrecht zur Fahrtrichtung in dem Aufstelldach auf dem Lattenrost positionierbar sind, insbesondere nächtigen, wobei insbesondere der Druck des Mediums in der Kammer auf der Seite der schwereren Person höher ist um eine im Wesentlichen horizontale Ausrichtung des Lattenrosts zu ermöglichen. Es kann auch vorgesehen sein, dass jeweils eine Schräglage des Fahrzeugs ausgleichbar ist, insbesondere indem entsprechend die eine oder andere Kammer mit höherem/niedrigeren Volumen und/oder Druck des Mediums versehen wird.

Es kann vorgesehen sein, dass der erste Hohlkörper einen ersten Anschlussstutzen aufweist, welcher vorzugsweise verschließbar ist. Beispielsweise kann es sich im einfachsten Fall um ein bevorzugt verschraubbares oder anderweitig abdichtbares Ventil handeln, ähnlich wie bei einer herkömmlichen Luftmatratze, sodass nicht unerwartet ein Teil des Mediums während der Benutzung (z.B. während des Schlafs im Aufstelldach nächtigenden Person) aus dem ersten Hohlkörper austreten kann. Vorzugsweise kann an dem ersten Anschlussstutzen, insbesondere wenn dieser offen ist, die erste Mediumszuführvorrichtung anschließbar sein, um dem ersten Hohlkörper ein erstes Medium zuzuführen oder zu entziehen. Der erste Anschlussstutzen kann ein erstes Rückschlagventil aufweisen, welches verhindert, dass beim Aufsetzen oder Entfernen der ersten Mediumszuführungsvorrichtung ein Teil des Mediums aus dem ersten Hohlkörper austritt.

Gemäß einem weiteren Aspekt der vorliegenden Erfindung kann es vorgesehen sein, dass das Antriebsmittel einen zweiten Hohlkörper aufweist, wobei der zweite Hohlkörper im Wesentlichen mediumdicht verschlossen ist, und das Volumen des zweiten Hohlkörpers reversibel verkleinert und vergrößert werden kann, indem ein zweites Medium, vorzugsweise Luft, über einen am zweiten Hohlkörper anordbaren zweiten Anschlussstutzen zur Vergrößerung des Volumens durch eine zweite Mediumzuführvorrichtung in den zweiten Hohlkörper eingeführt werden kann und aufgrund von dessen Ausdehnung das Aufstelldach zumindest teilweise in den Schlafmodus bringbar ist (mit anderen Worten erfolgt ein Aufbau des Aufstelldachs), und zur Verkleinerung des Volumens durch die zweite Mediumzuführvorrichtung dem zweiten Hohlkörper entzogen werden kann und aufgrund von dessen Zusammenfaltung das Aufstelldach zumindest teilweise in den Fahrmodus bringbar ist (mit anderen Worten erfolgt ein Abbau des Aufstelldachs). Dabei ist der zweite Hohlkörper zumindest abschnittsweise zwischen dem Randbereich der Decke und dem Dach des Fahrzeugs oder Anhängers anordbar.

Im Rahmen der vorliegenden Erfindung, kann unter einem zweiten Hohlkörper ein im Wesentlichen längserstreckter, idealerweise zumindest teilweise flexibler, Schlauch verstanden werden, welcher bevorzugt aufblasbar ist durch ein zweites Medium wie Luft und/oder Wasser. Mit anderen Worten kann dem zweiten Hohlkörper ein Medium zugeführt oder entzogen werden kann, wodurch sich das Volumen des zweiten Hohlkörpers vergrößert oder verringert. Dies kann im Rahmen der Erfindung zum Aufbau und Abbau des Aufstelldachs genutzt werden, vorzugsweise aufgrund der Verbindung zwischen dem zweiten Hohlkörper, dem Dach und der Decke, insbesondere indem bei einer im Wesentlichen vollständigen Füllung bzw. bei maximalen Volumen des zweiten Hohlkörpers, das Aufstelldach in den Schlafmodus gebracht werden kann und/oder gehalten werden kann, ohne dass dieses von sich aus wieder zumindest teilweise in den Fahrmodus wechselt. Somit kann ein optimiertes Aufstelldach zur Verfügung gestellt werden, welches insbesondere einen einfachen, reversiblen Aufbau und Abbau ermöglicht und zudem wartungsarm und umweltfreundlich ist. Vereinfacht kann man sich mit anderen Worten das Prinzip ähnlich einem Fahrradreifen bzw. Fahrradschlauch vorstellen, wobei letzterer anfangs ungefüllt ist, dann mit Luft über einen Anschlussstutzen befüllt wird, wobei sich anfangs sein Volumen stark erhöht, und zuletzt in seine finale Form gebracht wird (dies entspricht im Wesentlichen dem vollständigen Aufbau des Aufstelldachs welches den Reifenmantel darstellen kann), wobei zuletzt bevorzugt eine weitere Zuführung des Mediums lediglich den Druck im Fahrradschlauch erhöht und zu dessen Formstabilität beiträgt.

Der zweite Hohlkörper ist zumindest abschnittsweise an dem Randbereich der Decke befestigt. Unter dem Randbereich der Decke kann der Teil der Decke verstanden werden, welcher sich auf der im Wesentlichen nach unten weisenden Seite der Decke befindet. Dabei kann es sich um den Randbereich der Decke handeln, beispielsweise die äußersten 40cm, vorzugsweise, die äußersten 30cm, besonders bevorzugt die äußersten 20cm, idealerweise die äußersten 10cm. Hierbei ist bei einem breiteren Randbereich eine robustere Befestigung des zweiten Hohlkörpers an der Decke möglich, während das innenliegende Schlafvolumen im Schlafmodus dadurch verkleinert wird. Umgekehrt kann durch einen schmaleren Randbereich das innenliegende Schlafvolumen maximiert werden.

Der zweite Hohlkörper ist zudem zumindest abschnittsweise an dem Dach des Fahrzeugs oder Anhängers befestigt. Dabei kann es vorteilhaft sein, wenn der zweite Hohlkörper im Wesentlichen an einem nach oben weisenden Randbereich des Dachs des Fahrzeugs oder Anhängers befestigt ist, welcher sich bevorzugt im Fahrmodus im Wesentlichen unmittelbar unterhalb des Randbereichs der Decke befindet, wodurch bei einem Aufbau und Abbau des Aufstelldachs dieses möglichst direkt und geradlinig vom Fahrzeug oder Anhänger weg aufbaut oder zum Fahrzeug oder Anhänger hin abbaut. Mit anderen Worten kann ein im Wesentlichen überlappender Randbereich vorgesehen sein, innerhalb dessen im Fahrmodus, der nach unten weisende Randbereich der Decke und der nach oben weisende Randbereich des Dachs im Wesentlichen direkt übereinanderliegen. Vorzugsweise ist der zweite Hohlkörper in diesem Randbereich anordbar.

Besonders bevorzugt ist es, wenn im Wesentlichen zumindest teilweise entlang des Umfangs der Decke des Aufstelldachs, der zweite Hohlkörper abschnittsweise abwechselnd an der Decke, insbesondere im nach unten weisenden Randbereich der Decke, und am Dach, insbesondere an dem nach oben weisenden Randbereich des Dachs, angeordnet ist, wobei bevorzugt jeweils das andere Bauteil, also beispielsweise das Dach oder die Decke, in diesem Bereich frei von dem zweiten Hohlkörper sind, mit anderen Worten der zweite Hohlkörper dort also nicht angeordnet ist. Somit kann mit minimalen Material bzw. einem möglichst geringen Volumen des zweiten Hohlkörpers dennoch ein Aufbau und Abbau des Aufstelldachs erfolgen. Dabei können die jeweils aufeinanderfolgenden Abschnitte an der Decke und am Dach durch nach oben stehende Abschnitte verbunden sein, welche bevorzugt weder am Dach noch an der Decke befestigt sind, sondern bevorzugt nur mit benachbarten Abschnitten des zweiten Hohlkörpers verbunden sind. Der Aufbau des Aufstelldachs kann dabei primär durch das Befüllen dieser nach oben stehenden Abschnitte erfolgen, insbesondere da diese bei einer Füllung in besonderem Maße den Abstand zwischen dem Dach und der Decke erhöhen. Umgekehrt kann der Abbau des Aufstelldachs primär durch das Entleeren dieser nach oben stehenden Abschnitte erfolgen. Dadurch kann durch ein vergleichsweise geringes Volumen des zweiten Mediums, das Aufstelldach vollständig aufgebaut werden, insbesondere im Vergleich zu einem Aufstelldach bei welchem die Wände zum Aufbau vollständig oder überwiegend mit dem zweiten Medium gefüllt werden müssen.

Im Rahmen der vorliegenden Erfindung ist es denkbar, dass der zweite Hohlkörper an dem Dach und/oder der Decke zumindest abschnittsweise durch eine Fügeverbindung befestigt ist. Dabei kann die Fügeverbindung eine unlösbare Klebeverbindung oder Nietverbindung aufweisen, um vorteilhafterweise eine besonders robuste und langlebige Verbindung herzustellen. Alternativ kann es vorgesehen sein, dass die Fügeverbindung eine reversibel lösbare Schraubverbindung oder Kederverbindung aufweist. Dies kann vorteilhaft sein, weil die Lebensdauer eines Fahrzeugs länger sein kann als die der Bauteile des Aufstelldachs, insbesondere des zweiten Hohlkörpers, welcher aufgrund seiner Anforderungen an den reversiblen Aufbau und Abbau weniger langlebig sein kann. Somit kann vorzugsweise ein vereinfachter Austausch und/oder eine einfachere Wartung und Montage erzielt werden.

Dabei kann vorzugsweise der zweite Hohlkörper in Fahrtrichtung rechts und links zumindest abschnittsweise auf dem Randbereich des Dachs befestigt sein, vorteilhafterweise durch eine Kederverbindung um eine einfache Montage und/oder Wartung zu ermöglichen. Besonders bevorzugt kann es sein, wenn rechts und links der zweite Hohlkörper im Wesentlichen identisch ausgeführt ist, um dadurch ein identisches Verhalten beim Aufbau und Abbau zu gewährleisten.

Dabei kann vorzugsweise der zweite Hohlkörper zumindest einen nach oben stehenden Abschnitt, insbesondere einen im Wesentlichen senkrechten nach oben stehenden Abschnitt aufweisen, welcher sich insbesondere im Schlafmodus im Wesentlichen nach oben vom Dach erstreckt. Dabei kann senkrecht in diesem Zusammenhang einen rechten Winkel beschreiben. Mit anderen Worten kann es vorgesehen sein, dass vor allem der zumindest eine nach oben stehende Abschnitt beim Aufbau aufgrund der Vergrößerung seines Volumens den Aufbau des Aufstelldachs zumindest teilweise erwirkt, insbesondere weil dadurch der Abstand zwischen der Decke und dem Dach in besonderem Maße vergrößert wird, verglichen beispielsweise mit einem lediglich entlang der Fahrtrichtung angeordneten Abschnitt des zweiten Hohlkörpers. Mit anderen Worten kann es vorgesehen sein, dass vor allem der zumindest eine nach oben stehende Abschnitt beim Abbau aufgrund der Verkleinerung seines Volumens den Abbau des Aufstelldachs erwirkt, insbesondere weil dadurch der Abstand zwischen der Decke und dem Dach in besonderem Maße verringert wird.

Besonders bevorzugt kann es sein, wenn sich in Fahrtrichtung vorne links und vorne rechts jeweils ein nach oben stehender Abschnitt des zweiten Hohlkörpers befindet. Dadurch kann ein besonders symmetrischer Aufbau und Abbau erzielt werden, insbesondere bezüglich der in Fahrtrichtung linken und rechten Seite des Aufstelldachs. Mit anderen Worten kann somit ein in Seitenansicht und im Schlafmodus im Wesentlichen dreieckiges Aufstelldach realisiert werden, wobei das Aufstelldach im vorderen Bereich des Fahrzeugs höher ist.

Alternativ kann sich auch in Fahrtrichtung hinten links und hinten rechts jeweils ein nach oben stehender Abschnitt des zweiten Hohlkörpers befinden. Mit anderen Worten kann somit ein in Seitenansicht und im Schlafmodus im Wesentlichen dreieckiges Aufstelldach realisiert werden, wobei das Aufstelldach im hinteren Bereich des Fahrzeugs höher ist. Dies kann vorteilhaft sein, da dadurch auch eine Fahrt mit dem Fahrzeug im Schlafmodus denkbar wird, wobei aufgrund des vergleichsweise geringeren Luftwiderstands in dieser Konfiguration eine höhere Geschwindigkeit ermöglicht wird, ohne dass das Aufstelldach Schaden nimmt oder die Fahreigenschaften des Fahrzeugs negativ beeinflusst werden.

Es ist auch denkbar, dass sowohl vorne als auch hinten jeweils links und rechts der zweite Hohlkörper zumindest einen nach oben stehenden Abschnitt aufweist. Somit ergibt sich ein besonders symmetrischer Aufbau und Abbau, wobei die Decke des Aufstelldachs hierbei im Wesentlichen parallel zum Dach des Fahrzeugs angeordnet ist. Mit anderen Worten kann es sich hierbei um ein im Schlafmodus im Wesentlichen quaderförmiges Aufstelldach handeln, welches in Seitenansicht des Fahrzeugs viereckig, insbesondere im Wesentlichen rechteckig ausgestaltet ist. Weiterhin kann dadurch das innenliegende Schlafraumvolumen, welches den Innenraum des Fahrzeugs oder Anhängers erweitert, insbesondere um Raum für eine Schlafgelegenheit wie ein Bett für zumindest eine Person zur Verfügung zu stellen, maximiert werden.

Es ist auch denkbar, dass sowohl vorne als auch hinten jeweils links und rechts der zweite Hohlkörper zumindest einen nach oben stehenden Abschnitt aufweist. Dabei kann es vorgesehen sein, dass die beiden hinteren oder vorderen nach oben stehenden Abschnitte länger sind wodurch sich im Schlafmodus eine Neigung der Decke nach vorne oder nach hinten ergibt. Mit anderen Worten kann es sich hierbei um ein Aufstelldach handeln welches im Schlafmodus in Seitenansicht des Fahrzeugs viereckig, jedoch nicht rechteckig ausgestaltet ist. Durch eine schräge Stellung (insbesondere nicht parallele Stellung) der Decke kann grundsätzlich verhindert werden, dass sich Wasser beispielsweise bei Regen auf oder in der Decke sammelt und dieses durch das Gewicht Schaden nimmt oder gar zusammenbricht.

Auch ist es denkbar, dass auf der linken Seite vorne und hinten, insbesondere nur dort, ein nach oben stehender Abschnitt vorgesehen ist oder auf der rechten Seite vorne und hinten, insbesondere nur dort, ein nach oben stehender Abschnitt vorgesehen ist. Dies ermöglicht vorteilhafterweise das Aufstelldach zu der jeweiligen Seite hin zu öffnen. Mit anderen Worten ergibt sich im Querschnitt eine dreieckige Form, wobei auf der Seite welche den nach oben stehenden Abschnitt aufweist das Aufstelldach im Schlafmodus höher ist als auf der anderen. Damit ergibt sich der Vorteil, dass die geöffnete Seite nach links oder rechts besonders groß ist, was den Komfort erhöhen kann.

Besonders bevorzugt kann es sein, dass der zweite Hohlkörper in Fahrtrichtung vorne ausschließlich zumindest abschnittsweise an dem Randbereich der Decke befestigt ist und nicht an dem Dach, während der zweite Hohlkörper in Fahrtrichtung links und rechts gleichermaßen zumindest abschnittsweise auf dem Randbereich des Dachs befestigt ist, vorzugsweise durch eine Kederverbindung. Idealerweise kann dabei der zweite Hohlkörper in Fahrtrichtung vorne im Wesentlichen über die gesamte Breite der Decke im nach unten weisenden Randbereich der Decke befestigt sein, während links und rechts der zweite Hohlkörper im Wesentlichen über die gesamte Länge der Decke in Fahrtrichtung (insbesondere bezogen auf den Fahrmodus) an dem nach oben weisenden Randbereich des Dachs befestigt ist. Vorzugsweise weist der zweite Hohlkörper dabei zwischen diesen vorgenannten Abschnitten, jeweils links vorne und rechts vorne einen nach oben stehenden Abschnitt auf der die Abschnitte verbindet. Somit ergibt sich vorzugsweise ein einzelner zusammenhängender zweiter Hohlkörper. Dieser ist mit anderen Worten im hinteren Bereich des Aufstelldachs gar nicht ausgestaltet, auf der rechten Seite entlang des Dachs, am vorderen rechten Eck des aufgebauten Aufstelldachs durch einen nach oben stehenden Abschnitt, im vorderen Bereich entlang der Decke, am vorderen linken Eck des aufgebauten Aufstelldachs durch einen nach oben stehenden Abschnitt und auf der linken Seite entlang des Dachs. Mit anderen Worten kann das Aufstelldach im vorderen Bereich dadurch aufbaubar sein, während es im hinteren Bereich lediglich verschwenkt wird. Dies kann vorteilhaft sein um zum einen das Volumen des zweiten Hohlkörpers möglichst gering auszugestalten und dennoch den erfindungsgemäßen Aufbau und Abbau zu ermöglichen. Zum anderen kann dies besonders bevorzugt sein um eine Kombination aus erstem und zweiten Hohlkörper bereitzustellen, bei dem der Lattenrost auf dem ersten bzw. zweiten Hohlkörper, insbesondere kombinierten Hohlkörper, angeordnet ist. Mit anderen Worten kann der zweite Hohlkörper hierbei den ersten Hohlkörper ganz oder zumindest teilweise ersetzen, bzw. insbesondere ein und denselben Hohlkörper bilden. Bei einem verbundenen Hohlkörper kann dieser als erster bzw. zweiter Hohlkörper bezeichnet werden, insbesondere weil es sich um einen einzigen zusammenhängenden Hohlkörper handeln kann, der vorzugsweise sowohl den Aufbau und Abbau des Aufstelldachs als auch ein Anheben und Absenken des Lattenrosts erwirken kann. Damit kann ein simultaner Aufbau und Abbau des Aufstelldachs und des Lattenrosts erzielt werden, wodurch insbesondere Material, Gewicht, Kosten, sowie Aufbau- und Abbauzeit eingespart werden. Es kann alternativ auch vorgesehen sein, dass sich gemäß den vorangehenden Ausführungen der zweite Hohlkörper in Fahrtrichtung nicht vorne sondern stattdessen hinten ausschließlich zumindest abschnittsweise an dem Randbereich der Decke befestigt ist und vorne gar nicht, wobei hinten links und hinten rechts jeweils ein nach oben stehender Abschnitt ausgestaltet ist. Es ergibt sich ansonsten ein im Wesentlichen identischer Aufbau, mit dem Unterschied, dass das Aufstelldach hinten im Wesentlichen aufgebaut wird und vorne verschwenkt wird. Dies kann wie bereits zuvor ausgeführt vorteilhaft sein, um zumindest mit einer gewissen Geschwindigkeit das Fahrzeug oder den Anhänger zu bewegen ohne das Aufstelldach abzubauen. Es ist ebenfalls denkbar, dass sich gemäß den vorangehenden Ausführungen das Aufstelldach nach links oder rechts aufbaut während dieses insbesondere rechts oder links lediglich verschwenkt wird. Dies ist erzielbar indem der zweite Hohlkörper nur links oder rechts an dem nach unten weisenden Randbereich der Decke befestigt ist.

Dabei kann vorzugsweise der zweite Hohlkörper in Fahrtrichtung vorne zumindest abschnittsweise an dem Randbereich der Decke befestigt sein, vorzugsweise durch eine Kederverbindung um eine einfache Montage und/oder Wartung zu ermöglichen.

Dabei kann vorzugsweise der zweite Hohlkörper in Fahrtrichtung hinten zumindest abschnittsweise an dem Randbereich des Dachs befestigt sein, vorzugsweise durch eine Kederverbindung um eine einfache Montage und/oder Wartung zu ermöglichen. Dies kann vorteilhaft sein um auch im hinteren Bereich beim Aufbau des Aufstelldachs eine Anhebung des Aufstelldachs zu erwirken, welche insbesondere geringer sein kann als im vorderen Bereich des Fahrzeugs. Mit anderen Worten bildet das Aufstelldach dann in Seitenansicht kein einfaches Dreieck sondern ein Viereck. Damit ergibt sich ein leicht vergrößertes innenliegendes Schlafraumvolumen.

Alternativ oder zusätzlich kann der zweite Hohlkörper in Fahrtrichtung hinten zumindest abschnittsweise an dem Randbereich der Decke anordbar sein. Somit kann der zweite Hohlkörper im Wesentlichen aus einem einzelnen zusammenhängenden Hohlkörper gefertigt sein, welcher insbesondere einmal um das gesamte Aufstelldach herumläuft, und dabei bevorzugt abwechseln an der Decke und an dem Dach befestigt ist. Somit ergibt sich eine besonders einfache Möglichkeit der Fertigung.

Im Rahmen der Erfindung ist es denkbar, dass der zweite Hohlkörper zumindest eine Kammer aufweist, wobei die zumindest eine Kammer im Wesentlichen mediumdicht ist und das Volumen der zumindest einen Kammer reversibel verkleinert und vergrößert werden kann, wobei im Fahrmodus das Volumen der Kammer im Wesentlichen minimiert ist und im Schlafmodus das Volumen der Kammer größer ist als im Fahrmodus, vorzugsweise im Wesentlichen maximiert ist. Durch einen einzigen zusammenhängenden zweiten Hohlkörper bzw. eine Kammer kann das notwendige Volumen des zweite Mediums minimiert werden und dennoch ein erfindungsgemäßer Aufbau und Abbau des Aufstelldachs erzielt werden, insbesondere da nur einem einzigen zusammenhängenden zweiten Hohlkörper ein Medium zugeführt oder entzogen wird. Ein geringes Volumen des zweiten Hohlkörpers kann nicht nur das für die Herstellung notwendige Material minimieren, sondern zusätzlich auch die für den Abbau und Aufbau benötigte Zeit und/oder Energie.

Es kann auch vorgesehen sein, dass der zweite Hohlkörper zumindest zwei Kammern aufweist. Dadurch kann eine Einstellbarkeit erreicht werden, wobei unterschiedliche Kammern jeweils mit einem unterschiedlichen Volumen und/oder Druck des zweiten Mediums beaufschlagt werden können, insbesondere um dabei den Aufbau des Aufstelldachs zu beschleunigen, zu verlangsamen, kontrolliert ablaufen zu lassen und/oder das Aufstelldach im Schlafmodus an unterschiedlichen Stellen unterschiedlich rigide auszugestalten um beispielsweise äußeren Umwelteinflüssen wie Wind oder Regen besonders effizient zu kompensieren.

Es kann vorgesehen sein, dass der zweite Hohlkörper einen zweiten Anschlussstutzen aufweist, welcher vorzugsweise verschließbar ist. Beispielsweise kann es sich im einfachsten Fall um ein bevorzugt verschraubbares oder anderweitig abdichtbares Ventil handeln, ähnlich wie bei einer herkömmlichen Luftmatratze, sodass nicht unerwartet ein Teil des Mediums während der Benutzung (z.B. während des Schlafs im Aufstelldach nächtigenden Person) aus dem zweiten Hohlkörper austreten kann. Vorzugsweise kann an dem zweiten Anschlussstutzen, wenn dieser offen ist, die zweite Mediumszuführvorrichtung anschließbar sein, um dem zweiten Hohlkörper ein Medium zuzuführen oder zu entziehen. Der zweite Anschlussstutzen kann ein zweites Rückschlagventil aufweisen, welches verhindert, dass beim Aufsetzen oder Entfernen der zweiten Mediumszuführungsvorrichtung ein Teil des Mediums aus dem zweiten Hohlkörper austritt.

Im Rahmen der Erfindung ist es denkbar, dass der erste Hohlkörper und der zweite Hohlkörper miteinander verbindbar sind, insbesondere, dass sie einen gemeinsamen Hohlkörper bilden welchem anstelle eines ersten und zweiten Mediums ein gemeinsames Medium zugeführt oder entzogen werden kann. Dies kann vorteilhaft sein, um ein Anheben des Lattenrosts und einen Wechsel vom Fahrmodus in den Schlafmodus im Wesentlichen parallel bzw. gleichzeitig zu erzielen. Dies kann vorteilhaft sein, um ein Absenken des Lattenrosts und einen Wechsel vom Schlafmodus in den Fahrmodus im Wesentlichen parallel bzw. gleichzeitig zu erzielen. Dies kann jeweils den Vorteil bieten, dass nur ein gemeinsames Medium und/oder nur eine Mediumzuführungsvorrichtung nötig ist, und eine gemeinsame Produktion und/oder Montage möglich ist, was insbesondere Kosten und/oder Gewicht sparen kann. Es kann sich zudem ein besonders einfacher Aufbau und Abbau ergeben.

Es ist denkbar, dass zwischen dem ersten und dem zweiten Hohlkörper ein erstes Druckregelmittel anordbar ist, welches vorzugsweise einstellbar offen, teilweise geschlossen oder vollständig geschlossen (abdichtend) sein kann, beispielsweise ein manuell von außen bedienbares Ventil oder Drehventil. Dies kann vorteilhaft sein, um über den ersten, zweiten und/oder einen gemeinsamen Anschlussstutzen, dem ersten und zweiten Hohlkörper anfangs gemeinsam ein Medium zuzuführen oder zu entziehen, und nach dem Schließen des ersten Druckregelmittels, dem ersten oder dem zweiten Hohlkörper ein zusätzliches Volumen des Mediums und/oder zusätzlichen Druck zuzuführen. Bei einem größeren Druck im ersten Hohlkörper kann dies zu einer härteren Lagerung des Lattenrosts führen, während der Druck im zweiten Hohlkörper geringer ist, aber dennoch ausreichend um das Aufstelldach in den Schlafmodus zu bringen oder im Schlafmodus zu halten. Bei einem geringeren Druck im ersten Hohlkörper kann dies zu einer weicheren Lagerung des Lattenrosts führen, während der Druck im zweiten Hohlkörper größer ist, insbesondere um das Aufstelldach schnell in den Schlafmodus zu bringen oder besonders rigide im Schlafmodus zu halten. Weiterhin kann dies vorteilhaft sein um den Druck in dem ersten oder zweiten Hohlkörper separat und/oder zu einem späteren Zeitpunkt einzustellen, ohne den Druck im jeweils anderen Hohlkörper zu beeinflussen.

Alternativ oder zusätzlich zu dem zweiten Hohlkörper kann das Antriebsmittel zumindest einen mechanischen Antrieb aufweisen, insbesondere um durch ein Heben der Decke das Aufstelldach zumindest teilweise von dem Fahrmodus in den Schlafmodus zu bewegen oder um durch ein Senken der Decke das Aufstelldach von dem Fahrmodus in den Schlafmodus zu bewegen, wobei ein erstes Ende des zumindest einen mechanischen Antriebs auf dem nach oben weisenden Randbereich des Dachs anordbar ist und ein zweites Ende an dem nach unten weisenden Randbereich der Decke anordbar ist, wobei vorzugsweise zwei mechanische Antriebe vorgesehen sind und sich ein erster mechanischer Antrieb in Fahrtrichtung rechts und ein zweiter mechanischer Antrieb in Fahrtrichtung links befindet, wobei der mechanische Antrieb insbesondere zumindest einen Hubzylinder aufweisen kann. Dabei kann es vorgesehen sein, dass der zumindest eine mechanische Antrieb zusätzlich zu dem zweiten Hohlkörper verwendbar ist, um den Aufbau und/oder Abbau des Aufstelldachs zu unterstützen, insbesondere um einen gleichmäßigen Aufbau und/oder Abbau zu gewährleisten. Somit kann auch verhindert werden, dass der Aufbau und/oder Abbau unterbrochen wird, beispielsweise weil der zweite Hohlkörper blockiert (z.B. durch einen Unterdruck oder Überdruck in einem Teilbereich) oder einen Defekt hat, insbesondere durch eine unerwünschte Blockade. Dies kann vorteilhaft sein, da ein mechanischer Antrieb in diesem Fall wesentlich einfacher und gewichtseinsparend ausgelegt werden kann, da durch ein Zusammenwirken mit dem zweiten Hohlkörper nicht das gesamte Gewicht des Dachs bewegt werden muss. Es kann auch vorgesehen sein, dass der zumindest eine mechanische Antrieb für den Notfallbetrieb nutzbar ist, beispielsweise wenn ein Aufbau und/oder Abbau des Aufstelldachs durch den zweiten Hohlkörper nicht möglich ist, insbesondere bei einem Defekt.

Gemäß einem weiteren Aspekt der vorliegenden Erfindung kann es vorgesehen sein, dass das Aufstelldach zumindest ein Scherenscharnier aufweist, insbesondere um das Aufstelldach robust zumindest teilweise von dem Fahrmodus in den Schlafmodus zu führen, zumindest teilweise von dem Fahrmodus in den Schlafmodus zu führen, und/oder in dem Fahrmodus oder Schlafmodus zu halten. Dabei sind vorzugsweise zwei Scherenscharniere vorgesehen sind, wobei sich ein erstes Scherenscharnier in Fahrtrichtung rechts und ein zweites Scherenscharnier in Fahrtrichtung links befindet.

Es kann vorgesehen sein, dass das zumindest eine Scherenscharnier, die Ausdehnung bzw. den Aufbau des Aufstelldachs mechanisch begrenzt, beispielsweise durch eine äußeren Anschlagpunkt, wobei bei dem Aufbau des Aufstelldachs eine weitere Volumenvergrößerung des Aufstelldachs nicht möglich ist, wenn der Anschlagpunkt des Scherenscharniers erreicht ist. Dies kann erlauben, das Volumen des Aufstelldachs zu begrenzen.

Dabei kann es vorgesehen sein, das Aufstelldach in einem Notfallbetrieb rein manuell zu aufzubauen oder abzubauen, was durch die Führung des zumindest einen Scherenscharniers ermöglicht wird.

Dabei kann das zumindest eine Scherenscharnier jeweils zwischen dem nach oben weisenden Randbereich des Dachs und dem nach unten weisenden Randbereich der Decke reversibel lösbar befestigt sein. Es kann auch vorgesehen sein, dass das zumindest eine Scherenscharnier nur für den Notfallbetrieb werkzeuglos montierbar und demontierbar ist.

Gemäß einem weiteren Aspekt der vorliegenden Erfindung kann es vorgesehen sein, dass das Aufstelldach zumindest einen Dämpfer aufweist, insbesondere um das Aufstelldach kontrolliert zumindest teilweise von dem Fahrmodus in den Schlafmodus zu bringen oder von dem Fahrmodus in den Schlafmodus. Dabei sind vorzugsweise zwei Dämpfer vorgesehen, wobei sich ein erster Dämpfer in Fahrtrichtung rechts und ein zweiter Dämpfer in Fahrtrichtung links befindet, wobei der Dämpfer vorzugsweise einen Reibdämpfer oder fluiddynamischen Dämpfer aufweist.

Vorteilhafterweise verhindert oder mindert der zumindest eine Dämpfer schlagartige Positionsänderungen, insbesondere ein Schnalzen, Schlagen, und/oder hartes Anschlagen beim Aufbau oder Abbau des Aufstelldachs. Dadurch kann der Komfort erhöht, die Handhabung angenehmer gestaltet und der Verschleiß verringert werden.

Gemäß einem weiteren Aspekt der vorliegenden Erfindung kann es vorgesehen sein, dass das Aufstelldach einen dritten Hohlkörper aufweist, insbesondere eine Luftmatratze, wobei der dritte Hohlkörper auf dem Lattenrost anordbar ist. Dabei ist der dritte Hohlkörper im Wesentlichen mediumdicht verschlossen, und insbesondere das Volumen des dritten Hohlkörpers kann reversibel verkleinert und vergrößert werden, indem ein drittes Medium, vorzugsweise Luft, über einen am dritten Hohlkörper anordbaren dritten Anschlussstutzen zur Vergrößerung des Volumens durch eine dritte Mediumzuführvorrichtung in den dritten Hohlkörper eingeführt werden kann, wobei aufgrund von dessen Ausdehnung dieser zumindest teilweise, vorzugsweise vollständig, in den Schlafmodus bringbar ist, in welchem der dritte Hohlkörper im Wesentlichen zumindest teilweise, vorzugsweise vollständig, von dem dritten Medium gefüllt ist, und zur Verkleinerung des Volumens durch die dritte Mediumzuführvorrichtung dem dritten Hohlkörper entzogen werden kann, um diesen aufgrund von dessen Zusammenfaltung zumindest teilweise in den Fahrmodus zu bringen, in welchem der dritte Hohlkörper im Wesentlichen kein drittes Medium enthält.

Im Rahmen der vorliegenden Erfindung, kann unter einem dritten Hohlkörper ein im Wesentlichen längserstreckter, idealerweise zumindest teilweise flexibler, Schlauch verstanden werden, welcher bevorzugt aufblasbar ist durch ein drittes Medium wie Luft und/oder Wasser. Mit anderen Worten kann es sich dabei um eine Luftmatratze handeln. Idealerweise ist der dritte Hohlkörper im Schlafmodus im Wesentlichen quaderförmig, so dass eine Person bequem darauf liegend nächtigen kann. Es kann vorgesehen sein, den dritten Hohlkörper überhaupt nicht zu füllen und stattdessen eine herkömmliche Matratze oder Isomatte zu verwenden, vorzugsweise um unterschiedliche Schlafgewohnheiten und Bedürfnisse von Benutzern berücksichtigen zu können.

Der dritte Hohlkörper kann reversibel lösbar auf dem Lattenrost anordbar sein. Bevorzugt wird dabei der dritte Hohlkörper zumindest einer Latte, insbesondere auf dem Lattenrost, abgelegt. Somit entsteht mit anderen Worten ein Bett, bei dem ein auf einem Lattenrost liegende Matratze bereitgestellt wird. Dadurch kann der Schlafkomfort stark erhöht werden. Alternativ kann es auch vorgesehen sein, dass kein Lattenrost vorgesehen ist, und somit der dritte Hohlkörper im Wesentlichen direkt auf dem Dach positionierbar ist. Dadurch kann sich eine vereinfachte und billigere Variante erzielen lassen, wobei insbesondere die Elastizität bzw. Steifigkeit des Dachs verwendbar ist um den Schlafkomfort zu verbessern.

Der dritte Hohlkörper kann mit einem dritten Medium gefüllt werden, vorzugsweise mit einem Gas, insbesondere Luft, vergleichbar zu einer herkömmlichen Luftmatratze. Zusätzlich oder alternativ kann der dritte Hohlkörper mit einer Flüssigkeit, vorzugsweise Wasser gefüllt werden, vergleichbar zu einem Wasserbett, wodurch sich ein besonders hoher Komfort ergibt. Dabei kann es vorteilhaft sein warmes Wasser zu verwenden um eine Heizung im Winter bereitzustellen. Es ist auch denkbar ein Gemisch aus Luft und Wasser zu verwenden um einerseits eine Temperierung über das Wasser zu erzielen und andererseits das Gewicht im Vergleich zu einer vollständigen Füllung mit Wasser zu reduzieren.

Dabei kann im Fahrmodus der dritte Hohlkörper zumindest teilweise oder vollständig gefüllt sein. Es ist denkbar über den Füllgrad und den Druck des dritten Mediums, die Härte des dritten Hohlkörpers und somit der Matratze einzustellen. Mit anderen Worten kann es vorgesehen sein, den dritten Hohlkörper beliebig in seiner Härte und/oder seinem Volumen einzustellen, insbesondere um eine individuelle Einstellung des Liegekomforts zum Schlafen zu gewährleisten.

Es kann vorgesehen sein, dass der dritte Hohlkörper einen dritten Anschlussstutzen aufweist, welcher vorzugsweise verschließbar ist. Beispielsweise kann es sich im einfachsten Fall um ein bevorzugt verschraubbares oder anderweitig abdichtbares Ventil handeln, ähnlich wie bei einer herkömmlichen Luftmatratze, sodass nicht unerwartet ein Teil des Mediums während der Benutzung (z.B. während des Schlafs im Aufstelldach nächtigenden Person) aus dem dritten Hohlkörper austreten kann. Vorzugsweise kann an dem dritten Anschlussstutzen, wenn dieser offen ist, die dritte Mediumszuführvorrichtung anschließbar sein, um dem dritten Hohlkörper ein Medium zuzuführen oder zu entziehen. Der dritte Anschlussstutzen kann ein drittes Rückschlagventil aufweisen, welches verhindert, dass beim Aufsetzen oder Entfernen der dritten Mediumszuführungsvorrichtung ein Teil des Mediums aus dem dritten Hohlkörper austritt.

Im Rahmen der Erfindung ist es denkbar, dass der erste Hohlkörper und der dritte Hohlkörper miteinander verbindbar sind, insbesondere, dass sie einen gemeinsamen Hohlkörper bilden welchem anstelle eines ersten und dritten Mediums ein gemeinsames Medium zugeführt oder entzogen werden kann. Dies kann vorteilhaft sein, um ein Anheben des Lattenrosts und eine Füllung des dritten Hohlkörpers im Wesentlichen parallel bzw. gleichzeitig zu erzielen. Dies kann vorteilhaft sein, um ein Absenken des Lattenrosts und eine Entleerung des dritten Hohlkörpers im Wesentlichen parallel bzw. gleichzeitig zu erzielen. Dies kann jeweils den Vorteil bieten, dass nur ein gemeinsames Medium und/oder nur eine Mediumzuführungsvorrichtung nötig ist, und eine gemeinsame Produktion und/oder Montage möglich ist, was insbesondere Kosten und/oder Gewicht sparen kann. Zudem kann es vorgesehen sein, dass nur ein einziger Anschlussstutzen zur Befüllung oder Entleerung verwendet werden muss.

Es ist denkbar, dass zwischen dem ersten und dem dritten Hohlkörper ein zweites Druckregelmittel anordbar ist, welches vorzugsweise einstellbar offen, teilweise geschlossen oder vollständig geschlossen (abdichtend) sein kann, beispielsweise ein manuell von außen bedienbares Ventil oder Drehventil. Dies kann vorteilhaft sein, um über den ersten, dritten und/oder einen gemeinsamen Anschlussstutzen, insbesondere eine gemeinsame Mediumzuführvorrichtung anzuschließen, und dem ersten und dritten Hohlkörper anfangs gemeinsam ein Medium zuzuführen oder zu entziehen, und nach dem Schließen des zweiten Druckregelmittels, dem ersten oder dem dritten Hohlkörper ein zusätzliches Volumen des Mediums und/oder zusätzlichen Druck zuzuführen. Bei einem erhöhten Druck im ersten Hohlkörper kann dies zu einer härteren Lagerung des Lattenrosts führen, während der Druck im dritten Hohlkörper geringer ist, aber dennoch ausreichend um die Matratze in den Schlafmodus zu bringen oder im Schlafmodus zu halten. Weiterhin kann dies vorteilhaft sein um den Druck in dem ersten oder dritten Hohlkörper separat und/oder zu einem späteren Zeitpunkt einzustellen, ohne den Druck im jeweils anderen Hohlkörper zu beeinflussen.

Im Rahmen der Erfindung ist es denkbar, dass der zweite Hohlkörper und der dritte Hohlkörper miteinander verbindbar sind, insbesondere dass sie einen gemeinsamen Hohlkörper bilden welchem anstelle eines zweiten und dritten Mediums ein gemeinsames Medium zugeführt oder entzogen werden kann. Dies kann vorteilhaft sein, um einen Wechsel vom Fahrmodus in den Schlafmodus für den zweiten Hohlkörper und den dritten Hohlkörper im Wesentlichen parallel bzw. gleichzeitig zu erzielen. Dies kann vorteilhaft sein, um einen Wechsel vom Schlafmodus in den Fahrmodus für den zweiten Hohlkörper und den dritten Hohlkörper im Wesentlichen parallel bzw. gleichzeitig zu erzielen. Dies kann jeweils den Vorteil bieten, dass nur ein gemeinsames Medium, ein Anschlussstutzen und/oder nur eine Mediumzuführungsvorrichtung nötig ist, und eine gemeinsame Produktion und/oder Montage möglich ist, was insbesondere Kosten und/oder Gewicht sparen kann.

Es ist denkbar, dass zwischen dem zweiten und dem dritten Hohlkörper ein drittes Druckregelmittel anordbar ist, welches vorzugsweise einstellbar offen, teilweise geschlossen oder vollständig geschlossen (abdichtend) sein kann, beispielsweise ein manuell von außen bedienbares Ventil oder Drehventil. Dies kann vorteilhaft sein, um über den zweiten, dritten und/oder einen gemeinsamen Anschlussstutzen, insbesondere eine gemeinsame Mediumzuführvorrichtung anzuschließen, und dem zweiten und dritten Hohlkörper anfangs gemeinsam ein Medium zuzuführen oder zu entziehen, und nach dem Schließen des dritten Druckregelmittels, dem zweiten oder dem dritten Hohlkörper ein zusätzliches Volumen des Mediums und/oder zusätzlichen Druck zuzuführen. Bei einem größeren Druck im zweiten Hohlkörper kann dies dazu führen, dass das Aufstelldach schnell in den Schlafmodus gebracht werden kann oder besonders rigide im Schlafmodus gehalten wird, während der Druck im dritten Hohlkörper geringer ist, aber dennoch ausreichend um den dritten Hohlkörper zumindest teilweise in den Schlafmodus zu bringen oder im Schlafmodus zu halten. Weiterhin kann dies vorteilhaft sein um den Druck in dem zweiten oder dritten Hohlkörper separat und/oder zu einem späteren Zeitpunkt einzustellen, ohne den Druck im jeweils anderen Hohlkörper zu beeinflussen.

Im Rahmen der Erfindung ist es denkbar, dass der erste, zweite und dritte Hohlkörper miteinander verbindbar sind, insbesondere dass sie einen gemeinsamen Hohlkörper bilden welchem anstelle eines ersten, zweiten und dritten Mediums ein gemeinsames Medium zugeführt oder entzogen werden kann. Dies kann vorteilhaft sein, um einen Wechsel vom Fahrmodus in den Schlafmodus im Wesentlichen parallel bzw. gleichzeitig zu erzielen. Dies kann jeweils den Vorteil bieten, dass nur ein gemeinsames Medium, ein Anschlussstutzen und/oder nur eine Mediumzuführungsvorrichtung nötig ist, und eine gemeinsame Produktion und/oder Montage möglich ist, was insbesondere Kosten, Material und/oder Gewicht sparen kann.

Das erste, zweite und/oder dritte Druckregelmittel kann, wenn alle zumindest teilweise offen sind, dem ersten, zweiten und dritten Hohlkörper erlauben, anfangs gemeinsam ein Medium zugeführt oder entzogen zu bekommen. Nach dem Schließen von zumindest zwei der Druckregelmittel, kann den entsprechenden verbundenen Hohlkörpern jeweils über den ersten, zweiten und/oder dritten Anschlussstutzen separat ein zusätzliches Volumen des Mediums und/oder zusätzlichen Druck zugeführt oder entzogen werden. Dies kann vorteilhaft sein um den Druck in dem ersten, zweiten oder dritten Hohlkörper und/oder zumindest zwei verbundenen Hohlkörpern separat und/oder zu einem späteren Zeitpunkt einzustellen, ohne den Druck im jeweils anderen Hohlkörper oder verbundenen Hohlkörpern zu beeinflussen. Zudem ist es denkbar, dass an dem ersten, zweiten und/oder dritten Hohlkörper bzw. dem gemeinsamen Hohlkörper über den ersten, zweiten, dritten und/oder einen gemeinsamen Anschlussstutzen eine gemeinsame Mediumzuführvorrichtung anschließbar ist, um diese vorzugsweise in die Lage zu versetzen ein erstes, zweites, drittes und/oder gemeinsames Medium zuzuführen oder zu entziehen.

Gemäß einem weiteren Aspekt der vorliegenden Erfindung kann es vorgesehen sein, dass die Decke und/oder die zumindest drei Wände eine nach außen weisende Oberfläche aufweisen, welche insbesondere isolierend, blickdicht, stabilisierend und/oder mediumdicht ist.

Dabei kann es vorteilhaft sein, wenn die nach außen weisende Oberfläche isolierend wirkt, beispielsweise indem diese zumindest teilweise verspiegelt ist, um auf diese Weise einen unerwünschten Wärmeeintrag z.B. durch Sonneneinstrahlung zu reduzieren. Dies kann auch durch eine separate zusätzliche Sonnenschutzschicht erzielt werden, welche wie ein Rollo auf der Außenseite zusammengerollt sein kann und bei Bedarf manuell ausgerollt werden kann.

Dabei kann es vorteilhaft sein, wenn die nach außen weisende Oberfläche blickdicht ist, insbesondere indem diese einen dunklen Kunststoff aufweist, um die Privatsphäre innerhalb des Aufstelldachs im Schlafmodus zu gewährleisten und um die Sicherheit der darin befindlichen Personen zu gewährleisten.

Dabei kann es vorteilhaft sein, wenn die nach außen weisende Oberfläche beispielsweise Kevlar, Fließ oder robusten Kunststoff aufweist und somit stabilisierend ist, um eine nach außen hin möglichst gute Abschirmung gegen mechanische Belastung durch Umwelteinflüsse wie Wasser, Regen, Wind, Sonneneinstrahlung zu gewährleisten.

Dabei kann es vorteilhaft sein, wenn die nach außen weisende Oberfläche mediumdicht ist, insbesondere indem diese einen wasserdichten Kunststoff, Zeltstoff, Gummi oder Neopren aufweist, um das Eindringen von äußeren Umwelteinflüssen, insbesondere von Wind, Wasser, Gerüchen, Geräuschen sowie von Tieren zu verhindern.

Gemäß einem weiteren Aspekt der vorliegenden Erfindung kann es vorgesehen sein, dass das erste, zweite und/oder dritte Medium eine Flüssigkeit, und/oder ein Gas aufweist, wobei die Flüssigkeit vorzugsweise Wasser, insbesondere mit einem Gefrierschutzmittel, umfasst, wobei das Gas vorteilhafterweise Luft umfasst.

Es kann vorgesehen sein, dass das erste, zweite und dritte Medium identisch sind. Dies kann vorteilhaft sein, da somit eine identische, vereinfachte Befüllung und Entleerung des ersten, zweiten und/oder dritten Hohlkörpers erfolgen kann. Besonders bevorzugt kann es sein, als erstes, zweite und drittes Medium Luft zu verwenden. Dies bietet den Vorteil, dass der erste, zweite und/oder dritte Hohlkörper jeweils durch eine Mediumzuführvorrichtung wie eine Pumpe oder einen Kompressor befüllt bzw. entleert werden können. Es kann auch vorgesehen sein, dass der erste, zweite und/oder dritte Anschlussstutzen identisch ausgestaltet sind, wodurch vorzugsweise der gleiche Adapter zum Befüllen und Entleeren verwendet werden kann.

Gemäß einem weiteren Aspekt der vorliegenden Erfindung kann es vorgesehen sein, dass der erste, zweite und/oder dritte Hohlkörper zumindest eine Schicht aufweist, welche vorzugsweise einen Kunststoff wie PVC und/oder TPU umfasst. Alternativ kann es vorgesehen sein, dass der erste, zweite und/oder dritte Hohlkörper zumindest eine innere Schicht und eine äußere Schicht aufweist, wobei die innere und die äußere Schicht untrennbar miteinander, insbesondere per Vulkanisierung, verbunden sind. Dabei weist die innere Schicht einen Kunststoff auf, vorteilhafterweise Gummi, und die äußere Schicht ein gegen Verschleiß widerstandsfähiges Material, vorteilhafterweise einen gewobenen Mantel aus Polyesterfasern, oder ein Drop-Stitch Material.

Ein Drop-Stitch Material kann dabei zwei Schichten aufweisen welche durch eine Vielzahl an Polyesterfäden miteinander verbunden sind, wodurch eine besonders widerstandsfähige Struktur entsteht. Insbesondere kann das Drop-Stitch Material eine obere PVC-Schicht aufweisen. Drop-Stitch Material kann dabei besonders gut geeignet sein um sowohl eine hohe Robustheit zu gewährleisten als auch die Möglichkeit das Material reversibel durch ein Medium zu befüllen und wieder zu entleeren, beispielsweise mit Luft. Somit ergibt sich ein besonders langlebiges und robustes Material das aufblasbar ist.

Erfindungsgemäß wird ein Fahrzeug oder einen Anhänger, insbesondere ein Wohnmobil oder einen Campingwagen mit einem Aufstelldach bereitgestellt.

Gemäß einem weiteren Aspekt der vorliegenden Erfindung kann es vorgesehen sein, dass das Aufstelldach auf dem Dach des Fahrzeugs oder des Anhängers positionierbar ist, wobei vorzugsweise das Dach des Fahrzeugs oder des Anhängers zumindest teilweise als Boden für das Aufstelldach dient. Es kann auch vorgesehen sein, dass sich der Boden des Aufstelldachs im Wesentlichen unmittelbar oberhalb des Dachs befindet.

Gemäß einem weiteren Aspekt der vorliegenden Erfindung kann es vorgesehen sein, dass das Dach eine Öffnung aufweist, welche das Aufstelldach mit einem Innenraum des Fahrzeugs oder des Anhängers verbindet, und insbesondere zumindest einer Person ermöglicht im Schlafmodus das innenliegende Schlafraumvolumen des Aufstelldachs zu betreten oder zu verlassen.

Mit anderen Worten handelt es sich bei der Öffnung um ein Loch bzw. eine Ausnehmung im Dach, insbesondere vergleichbar mit einer Luke oder einem Schiebedach, wodurch ein Zugang in das Aufstelldach, insbesondere im Schlafmodus, ermöglicht wird. Dabei kann es sich auch um für Campingfahrzeuge bekannte Öffnungen handeln welche das Betreten oder Verlassen von Schlafgelegenheiten, insbesondere einem Alkoven oder Dachbett, ermöglichen. Es kann dabei auch vorgesehen sein, dass die Öffnung nur geringfügig kleiner ist als die waagrechte Erstreckung des Aufstelldachs, wodurch das Aufstelldach zumindest teilweise, insbesondere der erste, zweite und/oder dritte Hohlkörper, im Fahrmodus innerhalb des Fahrzeuginnenraums unterbringbar sind. Dies kann die maximale Bauhöhe des Aufstelldachs im Fahrmodus zusätzlich minimieren. Weiterhin können Komponenten im Fahrzeuginnenraum besonders gut geschützt werden.

Gemäß einem weiteren Aspekt der vorliegenden Erfindung kann es vorgesehen sein, dass das Aufstelldach im Wesentlichen hinter einem Windabweiser des Fahrzeugs oder Anhängers anordbar ist, insbesondere um den Luftwiderstand zu minimeren. Dabei kann im Fahrmodus das Aufstelldach im Wesentlichen vollständig hinter dem Windabweiser angeordnet sein, so dass das Aufstelldach im Wesentlichen von vorne nicht sichtbar ist, und idealerweise zu keinerlei zusätzlichen Luftwiderstand beispielsweise durch Verwirbelungen beiträgt. Dies kann insbesondere durch eine minimierte Bauhöhe des Aufstelldachs erzielt werden. Es kann vorgesehen sein, dass das Aufstelldach, insbesondere die Decke, bündig mit dem Windabweise abschließt, um eine optimierte stromlinienförmige Anpassung des Fahrzeugs zu erzielen. Dies minimiert den Luftwiderstand und verhindert, dass sich zwischen dem Windabweiser und dem Aufstelldach Schmutz oder Wasser ansammelt.

Dabei kann unter einem Windabweiser im Wesentlichen ein Spoiler verstanden werden, welcher sich im vorderen Bereich des Daches, bevorzugt in Fahrtrichtung vor dem Aufstelldach im Fahrmodus befindet. Es kann vorgesehen sein, dass der Windabweiser unlösbar mit dem Dach verbunden ist, und das Aufstelldach im Fahrmodus vorzugsweise bündig mit dem Windabweiser abschließt. Es ist auch denkbar, dass der Windabweiser mit der Decke des Aufstelldachs verbunden ist, wodurch der Windabweiser im Fahrmodus klassisch zur Reduktion des Luftwiderstands dient, während der Windabweiser im Schlafmodus als zusätzlicher Schutz vor äußeren Umwelteinflüssen wie Regen (im Sinne eines Dachvorsprungs) oder Sonneneinstrahlung (im Sinne einer rigiden Markise) dient. Es kann dabei vorgesehen sein, dass der Windabweiser die Decke des Aufstelldachs vollumfänglich umrandet, um die vorangehenden Vorteile zu realisieren.

Weiterhin wird erfindungsgemäß ein Verfahren bereitgestellt zur Benutzung eines Aufstelldachs für ein Fahrzeug oder einen Anhänger, insbesondere für ein Wohnmobil oder einen Campingwagen, insbesondere gemäß einem der obigen Ausführungen, vorzugsweise gemäß einem der Ansprüche 1 bis 9. Dabei kann das Verfahren den Aufbau und/oder Abbau eines Aufstelldachs umfassen.

Gemäß einem weiteren Aspekt der Erfindung kann ein Verfahren zum Aufbau eines Aufstelldachs für ein Fahrzeug oder einen Anhänger, insbesondere für ein Wohnmobil oder einen Campingwagen, bereitgestellt werden. Dabei wird zumindest einer der folgenden Schritte umfasst:
- Bereitstellen eines Aufstelldachs, umfassend einen Boden, und zumindest drei an dem Boden anordbare Wände, und eine Decke, welche an den zumindest drei Wänden anordbar ist,
- Wobei sich das Aufstelldach anfänglich in einem Fahrmodus befindet, wobei im Fahrmodus die Decke und der Boden im Wesentlichen aneinander angrenzen um die Bauhöhe des Aufstelldachs zu minimieren
- Aktivierung eines Antriebmittels
- Betätigung des Antriebmittels um das Aufstelldach zumindest teilweise, vorzugsweise vollständig, von dem Fahrmodus reversibel in einen Schlafmodus zu bringen
- wobei im Schlafmodus die Decke, der Boden und die zumindest drei Wände ein innenliegendes Schlafraumvolumen bilden, welches einen Innenraum des Fahrzeugs oder Anhängers erweitert, insbesondere um Raum für eine Schlafgelegenheit wie ein Bett für zumindest eine Person zur Verfügung zu stellen

Im Rahmen der Erfindung kann eine Aktivierung eines Antriebsmittels bedeuten, dass eine erste, zweite und/oder dritte (oder gemeinsame) Mediumzuführvorrichtung, insbesondere eine Pumpe aktiviert wird, beispielsweise indem diese an eine Stromversorgung angeschlossen wird. Dabei kann vorzugsweise die entsprechende Mediumzuführvorrichtung vom Bordnetz versorgt werden oder in dieses integriert sein. Besonders vorteilhaft kann es sein, wenn die erste, zweite und/oder dritte Mediumzuführvorrichtung integriert ausgeführt ist, wobei diese eine Pumpe und/oder einen Kompressor aufweist, um Luft zuführen oder entziehen zu können, wobei vorzugsweise auch ein Reifendruck des Fahrzeugs oder Anhängers angepasst werden kann, wobei vorzugsweise eine Druckanzeige und/oder ein Überdruckventil integriert ist, um eine übermäßige Füllung und somit Schäden verhindern zu können. Weiterhin kann eine Aktivierung eines Antriebsmittels den Anschluss einer ersten, zweiten und/oder dritten Mediumzuführvorrichtung an einen ersten, zweiten und/oder dritten Anschlussstutzen umfassen. Hierfür kann es vorgesehen sein, dass der Anschlussstutzen vorher geöffnet wird.

Im Rahmen der Erfindung kann eine Betätigung des Antriebsmittels bedeuten, dass ein Füllen oder Entleeren des ersten, zweiten und/oder dritten Hohlkörpers erfolgt, wobei vorzugsweise der erste, zweite und/oder dritte Anschlussstutzen an der ersten zweiten und/oder dritten Mediumzuführvorrichtung angeschlossen werden. Dabei wird nach dem Füllen oder Entleeren vorzugsweise der erste, zweite und/oder dritte Anschlussstutzen wieder geschlossen, wobei insbesondere der erste, zweite und/oder dritte Hohlkörper wieder mediumdicht verschlossen wird. Hierbei kann ein unerwünschtes Entleeren oder Befüllen durch ein im Anschlussstutzen vorgesehenes Rückschlagventil verhindert werden. Im Rahmen der Erfindung kann unter einer Betätigung des Antriebsmittels insbesondere zu verstehen sein, dass dem zweiten Hohlkörper ein zweites Medium zugeführt oder entzogen wird, insbesondere über eine zweite Mediumzuführvorrichtung welche über einen zweiten Anschlussstutzen mit dem zweiten Hohlkörper verbunden ist. Dabei kann das Aufstelldach bei einer Vergrößerung des zweiten Hohlkörpers bzw. einem Zuführen des zweiten Mediums in diesen, aufgebaut werden bis das Aufstelldach im Wesentlichen vollständig aufgebaut ist, und sich insbesondere im Schlafmodus befindet. Dabei kann das Aufstelldach durch eine Verkleinerung des zweiten Hohlkörpers bzw. ein Entziehen des zweiten Mediums aus diesem, abgebaut werden bis das Aufstelldach im Wesentlichen vollständig abgebaut ist, und sich insbesondere im Fahrmodus befindet.

Dabei kann das Aufstelldach vorzugsweise im Wesentlichen vollständig aufgebaut sein (im Schlafmodus), wenn das Volumen des zweiten Hohlkörpers im Wesentlichen maximiert ist, und insbesondere eine weitere Zufuhr eines Mediums im Wesentlichen nur noch den Druck innerhalb des zweiten Hohlkörpers erhöht, aber kaum noch dessen Volumen. Mit anderen Worten kann der zweite Hohlkörper dann maximal aufgeblasen sein, ähnlich einem vollständig (bzw. prall) aufgepumpten Wasserball oder einem Fahrradschlauch.

Dabei kann das Aufstelldach vorzugsweise im Wesentlichen vollständig abgebaut sein (im Fahrmodus), wenn das Volumen des zweiten Hohlkörpers im Wesentlichen minimiert ist, und insbesondere ein weiterer Entzug eines (zweiten) Mediums nicht mehr möglich ist. Mit anderen Worten kann der zweite Hohlkörper dann vollständig leer sein, ähnlich einem schlaffen nicht aufgeblasenen Wasserball oder einem Fahrradschlauch.

Aufgrund der Anordnung, insbesondere Befestigung, des zweiten Hohlkörpers an dem Dach und an der Decke, kann somit über das Volumen des zweiten Hohlkörpers ein Aufbau (bei Volumenvergrößerung) und Abbau (bei Volumenverkleinerung) des Aufstelldachs, und insbesondere auch ein Verharren im Fahrmodus bzw. Schlafmodus, erzielt werden, wenn das Volumen im Wesentlichen unverändert bleibt. Dies kann auch verglichen werden mit einer Hüpfburg, die im aufgeblasenen Zustand ihre Form hält.

Eine Aktivierung des Antriebsmittels kann alternativ oder zusätzlich auch das Beaufschlagen zumindest eines Hubzylinders umfassen. Eine Betätigung kann alternativ oder zusätzlich auch das Anheben bzw. Absenken des Aufstelldachs durch den zumindest einen Hubzylinder umfassen, beispielsweise indem diesem ein Arbeitsfluid zugeführt oder entzogen wird.

Gemäß einem weiteren Aspekt der Erfindung kann das Verfahren zur Benutzung, insbesondere zum Abbau, eines Aufstelldachs für ein Fahrzeug oder einen Anhänger, insbesondere für ein Wohnmobil oder einen Campingwagen, bereitgestellt werden. Dabei wird zumindest einer der folgenden Schritte umfasst:
- Bereitstellen eines Aufstelldachs, umfassend einen Boden, und zumindest drei an dem Boden anordbare Wände, und eine Decke, welche an den zumindest drei Wänden anordbar ist,
- Wobei sich das Aufstelldach anfänglich in einem Schlafmodus befindet, wobei im Schlafmodus die Decke, der Boden und die zumindest drei Wände ein innenliegendes Schlafraumvolumen bilden, welches einen Innenraum des Fahrzeugs oder Anhängers erweitert, insbesondere um Raum für eine Schlafgelegenheit wie ein Bett für zumindest eine Person zur Verfügung zu stellen
- Aktivierung eines Antriebmittels
- Betätigung des Antriebmittels, um das Aufstelldach zumindest teilweise, vorzugsweise vollständig, von einem Schlafmodus in einen Fahrmodus zu bringen
- Wobei im Fahrmodus die Decke und der Boden im Wesentlichen aneinander angrenzen um die Bauhöhe des Aufstelldachs zu minimieren

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen
- Fig. 1:: eine schematische Darstellung eines erfindungsgemäßen Aufstelldachs 1,
- Fig. 2:: eine schematische Darstellung eines erfindungsgemäßen Aufstelldachs 1,
- Fig. 3:: eine schematische Darstellung eines erfindungsgemäßen Aufstelldachs 1,
- Fig. 4:: eine schematische Darstellung eines erfindungsgemäßen Aufstelldachs 1,
- Fig. 5:: eine schematische Darstellung eines erfindungsgemäßen Aufstelldachs 1,
- Fig. 6:: eine schematische Darstellung eines erfindungsgemäßen Aufstelldachs 1,
- Fig. 7:: eine schematische Darstellung eines erfindungsgemäßen Aufstelldachs 1 im Schlafmodus 300,
- Fig. 8:: eine schematische Darstellung eines erfindungsgemäßen Aufstelldachs 1 im Fahrmodus 200.

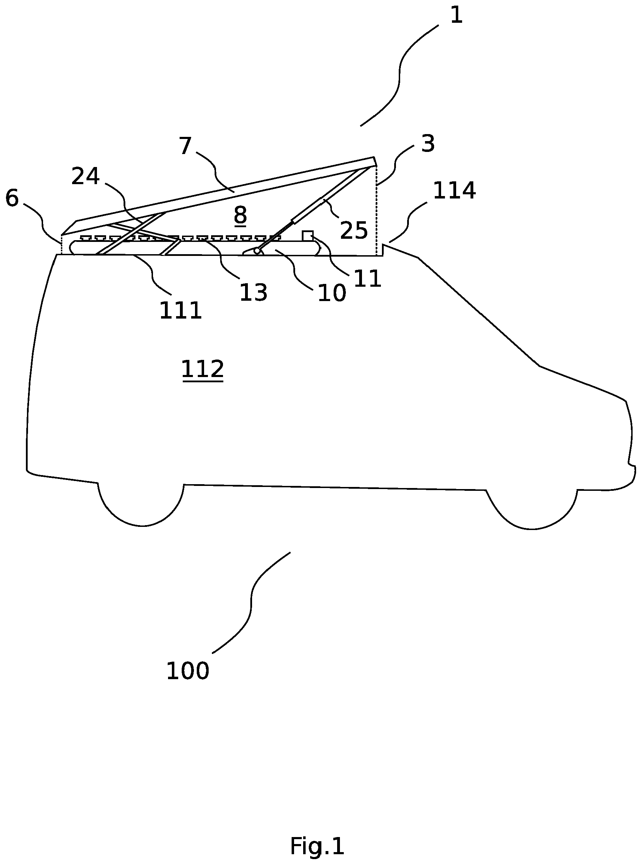

Fig. 1 zeigt ein Fahrzeug 100, in diesem Fall ein Wohnmobil, mit einem Aufstelldach 1 im Schlafmodus 300, das auf dem Dach 111 des Fahrzeugs 100 angeordnet ist. Dieses kann im Fahrmodus 200 im Wesentlichen vollständig hinter dem Windabweiser 114, angeordnet werden, um dadurch den Luftwiderstand zu minimieren. Um von dem Fahrmodus 200 in den Schlafmodus 300 zu gelangen, wird das Aufstelldach 1 in diesem Fall manuell aufgebaut, indem dieses nach oben gezogen wird, wodurch aufgrund der Führung durch das zumindest eine Scherenscharnier 24 das Aufstelldach 1 in den Schlafmodus 300 gebracht werden kann. Dabei ist zudem ein Dämpfer 25 gezeigt, welcher insbesondere ein hartes Anschlagen verhindert, und zudem auch zur Führung beitragen kann. Das Aufstelldach 1 weist eine Decke 7 auf, welche im Schlafmodus 300 zusammen mit der gezeigten vorderen Wand 3 und der hinteren Wand 6, sowie insbesondere mit der nicht abgebildeten linken Wand 4 (in Fahrtrichtung), der nicht abgebildeten rechten Wand 5 (in Fahrtrichtung), sowie insbesondere dem unmittelbar oberhalb des Dachs 111 befindlichen nicht abgebildeten Boden 2, ein innenliegendes Schlafraumvolumen 8 begrenzt, welches Platz zum Nächtigen für zumindest eine Person zur Verfügung stellt, und vorteilhafterweise den Innenraum 112 des Fahrzeugs 100 vergrößert. Gezeigt ist zudem ein erster Hohlkörper 10, welcher einen ersten Anschlussstutzen 11 aufweist, insbesondere um über eine nicht dargestellte erste Mediumzuführvorrichtung 12 ein erstes Medium, beispielsweise Luft, zugeführt oder entzogen zu bekommen. Auf dem ersten Hohlkörper 10 ist zumindest eine Latte 13 befestigt, vorzugsweise ist dort eine Vielzahl von Latten befestigt, so dass ein Lattenrost ähnlich einem herkömmlichen Bett entsteht. Mit anderen Worten kann es sich somit um einen aufblasbaren Lattenrost handeln. Dabei kann das in Fig. 1 dargestellte Aufstelldach 1 zusätzlich oder alternativ ein Antriebsmittel, 23 insbesondere einen zweiten Hohlkörper aufweisen um einen Wechsel zwischen dem Fahrmodus 200 und dem Schlafmodus 300 zu ermöglichen. Auch ist es denkbar, dass das Antriebsmittel 23 alternativ oder zusätzlich zumindest einen Hubzylinder aufweist um den Aufbau und Abbau des Aufstelldachs 1 zu gewährleisten oder zu unterstützen.

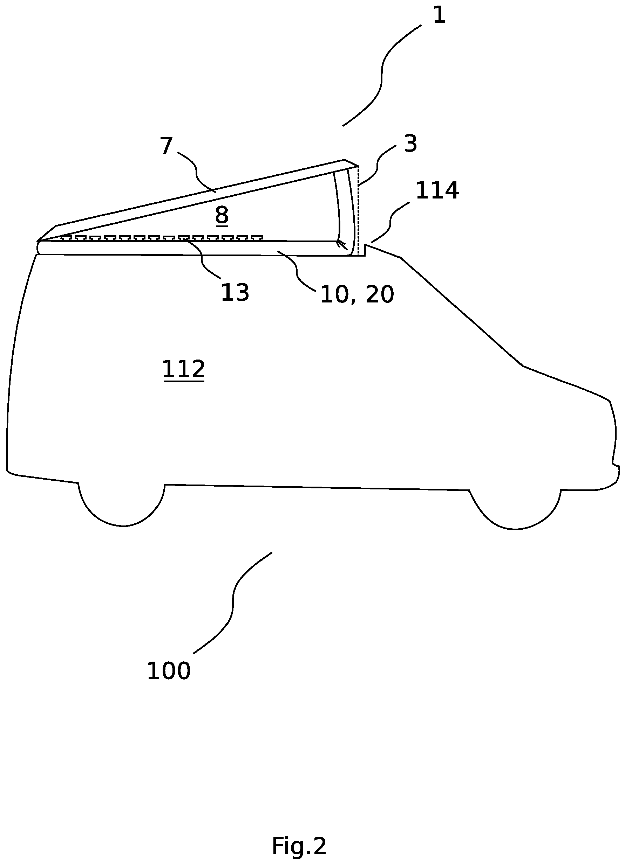

Fig. 2 zeigt ein Fahrzeug 100 mit einem Aufstelldach 1 im Schlafmodus 300. Dieses kann im Fahrmodus 200 hinter dem Windabweiser 114 angeordnet werden um dadurch den Luftwiderstand zu minimieren. Ebenfalls ist zumindest eine Latte 13 eines Lattenrosts dargestellt, auf welcher insbesondere eine Person nächtigen kann. Das Aufstelldach 1 weist eine Decke 7 auf, welche im Schlafmodus 300 zusammen mit der gezeigten vorderen Wand 3 sowie insbesondere mit der nicht abgebildeten linken Wand 4 (in Fahrtrichtung), der nicht abgebildeten rechten Wand 5 (in Fahrtrichtung), sowie insbesondere dem nicht abgebildeten Boden 2, ein innenliegendes Schlafraumvolumen 8 begrenzt, welches Platz zum Nächtigen für zumindest eine Person zur Verfügung stellt, und vorteilhafterweise den Innenraum 112 des Fahrzeugs 100 vergrößert. In Fig. 2 fehlt dabei die hintere Wand 6, es handelt sich in Seitenansicht insbesondere um eine im Wesentlichen dreieckige Ausgestaltung, wobei das Aufstelldach 1 am hinteren Ende im Wesentlichen verschwenkbar ist. Gezeigt ist zudem ein erster Hohlkörper 10 bzw. zweiter Hohlkörper 20. Vorliegend ist nur ein kombinierter erster bzw. zweiter Hohlkörper 20 vorgesehen. Mit anderen Worten handelt es sich um einen einzigen Hohlkörper, der vorzugsweise durch Luft aufblasbar ist. Somit kann durch eine Zuführung oder einen Entzug eines gemeinsamen Mediums, insbesondere eines ersten oder zweiten Mediums, das Aufstelldach 1 aufgebaut oder abgebaut werden, vorzugsweise durch das erfindungsgemäße Verfahren. Auf dem ersten bzw. zweiten Hohlkörper 10, 20 ist zumindest eine Latte 13 befestigt, vorzugsweise ist dort eine Vielzahl von Latten befestigt, um einen Lattenrost zu bilden, wodurch vorzugsweise durch eine Vergrößerung des Volumens des ersten bzw. zweiten Hohlkörpers, die zumindest eine Latte 13 angehoben wird. Mit anderen Worten ergibt sich insbesondere eine Kombination aus dem aufblasbaren Lattenrost und Antriebsmittel 23 zum Aufbau für das Aufstelldach.

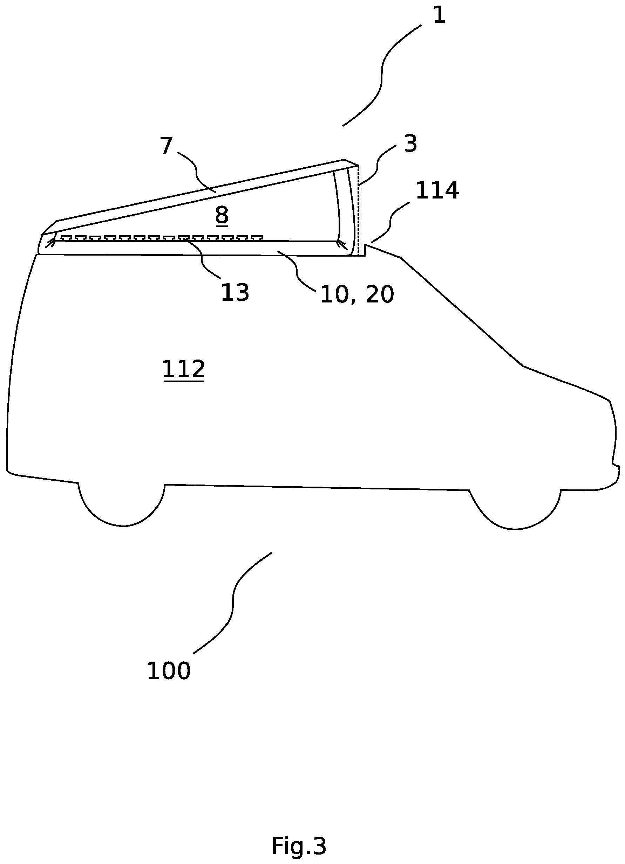

Fig. 3 zeigt ein Fahrzeug 100 mit einem Aufstelldach 1 im Schlafmodus 300. Dieses kann im Fahrmodus 200 hinter dem Windabweiser 114, angeordnet werden um dadurch den Luftwiderstand zu minimieren. Ebenfalls ist zumindest eine Latte 13 dargestellt, vorzugsweise ist dort eine Vielzahl von Latten 13 befestigt, um einen Lattenrost zu bilden auf welchem insbesondere eine Person nächtigen kann. Das Aufstelldach 1 weist eine Decke 7 auf, welche im Schlafmodus 300 zusammen mit der gezeigten vorderen Wand 3 und der nicht abgebildeten hinteren Wand 6, sowie insbesondere mit der nicht abgebildeten linken Wand 4 (in Fahrtrichtung), der nicht abgebildeten rechten Wand 5 (in Fahrtrichtung), sowie insbesondere dem nicht abgebildeten Boden 2, ein innenliegendes Schlafraumvolumen 8 begrenzt, welches Platz zum Nächtigen für zumindest eine Person zur Verfügung stellt, und vorteilhafterweise den Innenraum 112 des Fahrzeugs 100 vergrößert. Im Vergleich zu Fig. 2 ist hierbei insbesondere im Schlafmodus 300 auch der hintere Teil des Aufstelldachs 1 angehoben bzw. die Decke 7 angehoben vom Dach 111 des Fahrzeugs. Hier existiert wie in Fig. 2 nur ein gemeinsamer Hohlkörper 10, 20, welcher also mit anderen Worten als eine Kombination aus erstem und zweiten Hohlkörper bezeichnet werden kann. Durch diesen kann sowohl das Aufstelldach 1 von dem Fahrmodus 200 in den Schlafmodus 300 und umgekehrt gebracht werden, vorzugsweise durch das erfindungsgemäße Verfahren. Zudem kann dabei die zumindest eine Latte 13 angehoben und abgesenkt werden.

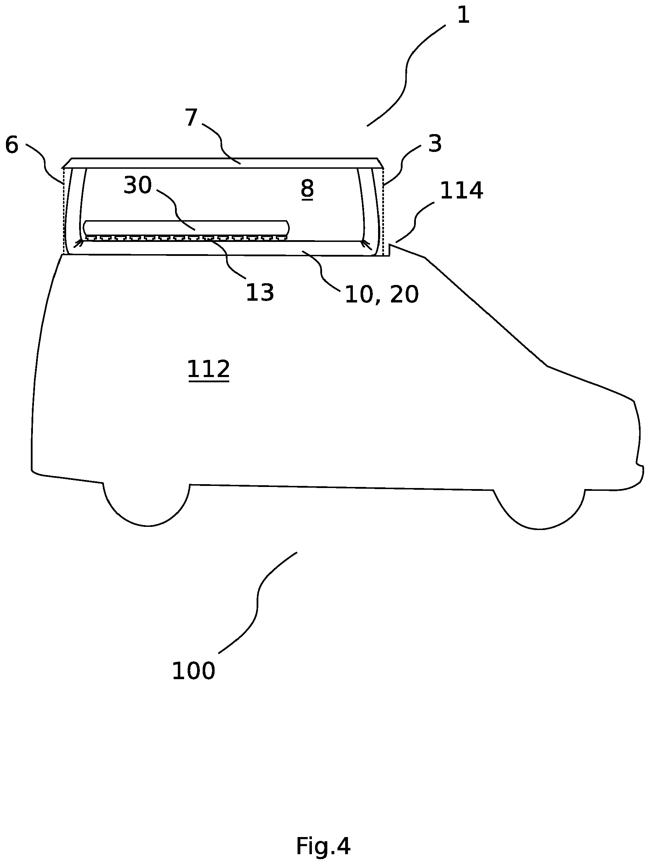

Fig. 4 zeigt ein Fahrzeug 100 mit einem Aufstelldach 1 im Schlafmodus 300. Dieses kann im Fahrmodus 200 hinter dem Windabweiser 114 angeordnet werden um dadurch den Luftwiderstand zu minimieren. Ebenfalls ist zumindest eine Latte 13 dargestellt, vorzugsweise ist dort eine Vielzahl von Latten 13 befestigt, um einen Lattenrost zu bilden auf welchem insbesondere eine Person nächtigen kann, wobei hier insbesondere darauf ein dritter Hohlkörper 30 vorgesehen ist, welcher vorzugsweise als Luftmatratze fungiert, um dadurch den Komfort zu maximieren. Das Aufstelldach 1 weist eine Decke 7 auf, welche im Schlafmodus 300 zusammen mit der gezeigten vorderen Wand 3 und der hinteren Wand 6, sowie insbesondere mit der nicht abgebildeten linken Wand 4 (in Fahrtrichtung), der nicht abgebildeten rechten Wand 5 (in Fahrtrichtung), sowie insbesondere dem nicht abgebildeten Boden 2, ein innenliegendes Schlafraumvolumen 8 begrenzt, welches Platz zum Nächtigen für zumindest eine Person zur Verfügung stellt, und vorteilhafterweise den Innenraum 112 des Fahrzeugs 100 vergrößert. Wie in Fig. 3, handelt es sich um einen kombinierten ersten bzw. zweiten Hohlkörper 10, 20, wodurch vorteilhafterweise sowohl der Lattenrost bzw. die zumindest eine Latte als auch das Aufstelldach 1 aufgebaut bzw. abgebaut werden können. Die vorderen und hinteren Abschnitte des ersten bzw. zweiten Hohlkörpers 10, 20 sind vorliegend im Wesentlichen gleich ausgeführt. Dadurch kann die Decke 7 im Schlafmodus 300 im Wesentlichen waagrecht angeordnet werden, wodurch insbesondere das innenliegende Schlafraumvolumen 8 maximiert wird.

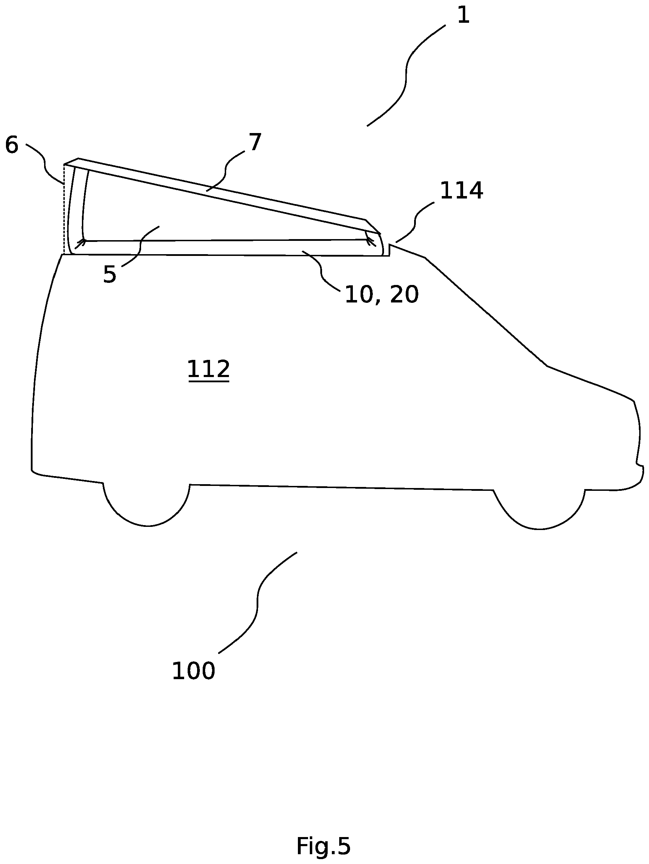

Fig. 5 zeigt ein Fahrzeug 100 mit einem Aufstelldach 1. Dieses kann im Fahrmodus 200 hinter dem Windabweiser 114, angeordnet werden um dadurch den Luftwiderstand zu minimieren. Bei Fig. 5 handelt es sich im Wesentlichen um ein gemäß Fig. 3 ausgeführtes Aufstelldach, 1 welches aber hier insbesondere nach hinten geöffnet wird. Das Aufstelldach 1 weist eine Decke 7 auf, welche im Schlafmodus 300 zusammen mit der nicht gezeigten vorderen Wand 3 und der hinteren Wand 6, sowie insbesondere mit der nicht abgebildeten linken Wand 4 (in Fahrtrichtung), der nicht abgebildeten rechten Wand 5 (in Fahrtrichtung), sowie insbesondere dem nicht abgebildeten Boden 2, ein innenliegendes Schlafraumvolumen 8 begrenzt, welches Platz zum Nächtigen für zumindest eine Person zur Verfügung stellt, und vorteilhafterweise den Innenraum 112 des Fahrzeugs 100 vergrößert.

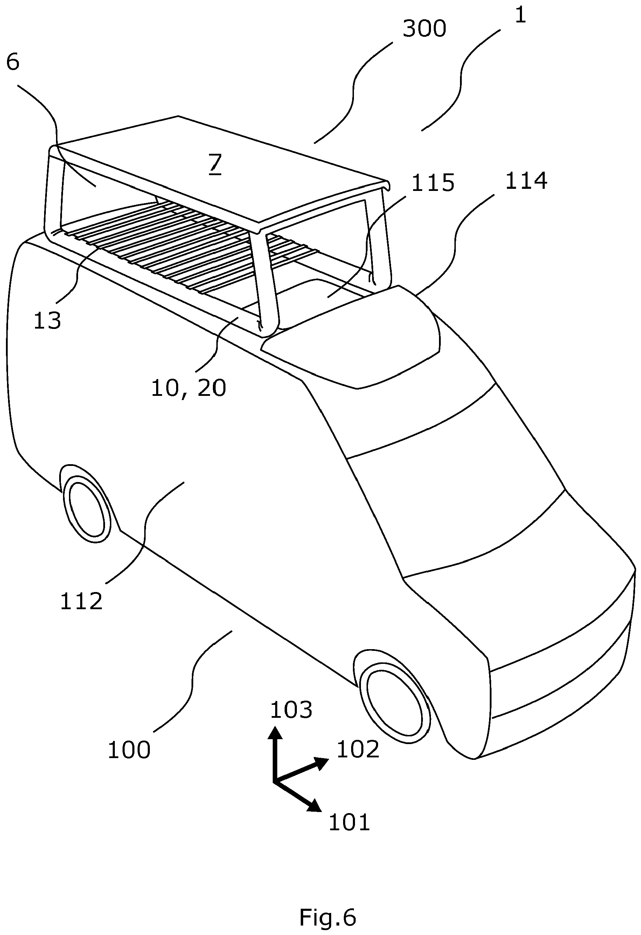

Fig. 6 zeigt ein Fahrzeug 100 mit einem Aufstelldach 1 im Schlafmodus 300. Dieses kann im Fahrmodus 200 hinter dem Windabweiser 114, angeordnet werden um dadurch den Luftwiderstand zu minimieren. Ebenfalls ist zumindest eine Latte 13 dargestellt, vorzugsweise ist dort eine Vielzahl von Latten 13 befestigt, um einen Lattenrost zu bilden auf welchem insbesondere eine Person nächtigen kann. Das Aufstelldach 1 weist eine Decke 7 auf, welche im Schlafmodus 300 zusammen mit der nicht gezeigten vorderen Wand 3 und der hinteren Wand 6, sowie insbesondere mit der nicht abgebildeten linken Wand 4 (in Fahrtrichtung), der nicht abgebildeten rechten Wand 5 (in Fahrtrichtung), sowie insbesondere dem nicht abgebildeten Boden 2, ein innenliegendes Schlafraumvolumen 8 begrenzt, welches Platz zum Nächtigen für zumindest eine Person zur Verfügung stellt, und vorteilhafterweise den Innenraum 112 des Fahrzeugs 100 vergrößert. Über eine Öffnung 115 ist das innenliegende Schlafraumvolumen 8 des Aufstelldachs 1, insbesondere über den Innenraum 112 des Fahrzeugs 100 erreichbar und mit diesem verbunden. Der gemeinsame Hohlkörper, mit anderen Worten der erste bzw. zweite Hohlkörper 10, 20, ist dabei abschnittsweise entlang der linken und rechten Seite des Dachs 111 des Fahrzeugs 100 angeordnet, um vorteilhafterweise die zumindest eine Latte 13 anheben und absenken zu können. Weiterhin weist gemeinsame Hohlkörper, mit anderen Worten der erste bzw. zweite Hohlkörper 10, 20, im Wesentlichen vorne links und rechts sowie hinten links und rechts abschnittsweise einen im Wesentlichen nach oben weisenden Abschnitt auf, und ist insbesondere dabei weder mit dem Dach 111 noch mit der Decke 7 verbunden. Somit kann sich jeweils ein frei schwebender Abschnitt ergeben, welcher den Abstand zwischen dem Dach 111 bzw. Boden 2 und der Decke 7 des Aufstelldachs 1 definiert. An diesen Stellen kann der gemeinsame bzw. erste bzw. zweite Hohlkörper enden, wodurch das Volumen vergleichsweise geringer ist und der Hohlkörper in zwei Seiten unterteilbar ist. Dies kann vorteilhaft sein um beispielsweise die linke und rechte Seite getrennt und unterschiedlich zu befüllen oder zu entleeren. Alternativ bzw. zusätzlich kann der erste bzw. zweite Hohlkörper 10, 20 auf der hinteren und/oder vorderen Seite (wie gezeigt) im Wesentlichen unterhalb der Decke 7 einen im Wesentlichen waagrechten Abschnitt aufweisen, welcher insbesondere die linke und rechte Seite verbindet und im Wesentlichen nahe des Rands auf der nach unten weisenden Seite der Decke 7 befestigt ist. Somit kann ein zusammenhängender Hohlkörper realisiert werden, welcher vorteilhafterweise über einen einzigen gemeinsamen bzw. ersten bzw. zweiten Anschlussstutzen befüllbar bzw. entleerbar ist. Gezeigt ist zudem ein Koordinatensystem umfassen eine x-Achse 101, y-Achse 102 und z-Achse 103 die ein Rechthandsystem darstellen. Das Aufstelldach 1 kann primär im Wesentlichen entlang der z-Richtung nach oben aufgebaut werden und in entgegengesetzt Richtung abgebaut werden. Die Fahrtrichtung kann dabei entlang der x-Achse 101 orientiert sein.

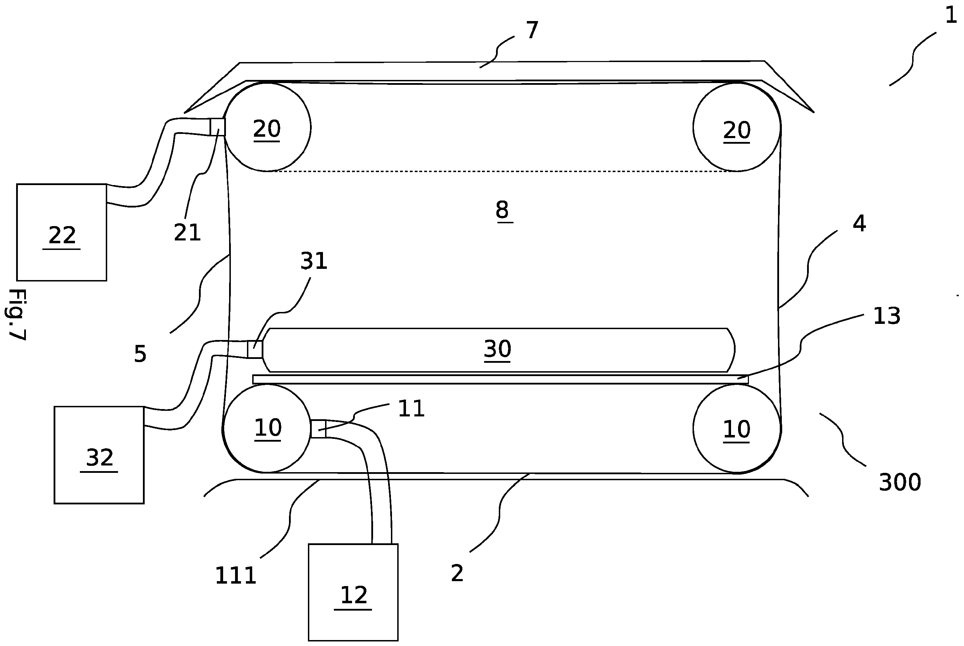

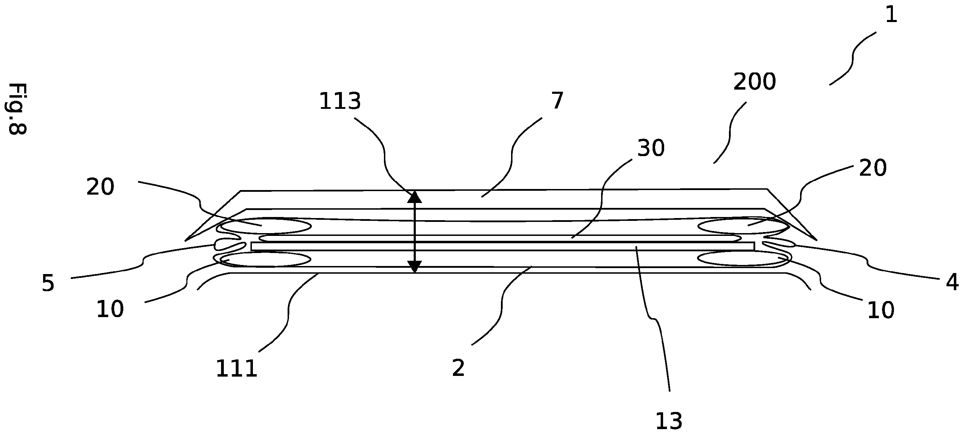

Fig. 7 zeigt ein Aufstelldach 1 für ein Fahrzeug 100. Bei Fig. 7 handelt es sich im Wesentlichen um das in Fig. 8 gezeigte Aufstelldach 1, jedoch vorliegend im Fahrmodus 200. Ebenfalls ist zumindest eine Latte 13 dargestellt, welche Teil eines Lattenrosts sein kann, auf welcher insbesondere eine Person nächtigen kann. Die zumindest eine Latte 13 befindet sich insbesondere in Schlafhöhe, vorliegend in der maximalen Lattenrosthöhe, da durch den ersten Hohlkörper 10, keine höhere Stellung (also weiter oben) einstellbar ist. Die zumindest eine Latte 13 ist dabei auf einem ersten Hohlkörper 10 angeordnet, welchem über einen ersten Anschlussstutzen 11 ein erstes Medium durch eine erste Mediumzuführvorrichtung 12 zugeführt oder entzogen werden kann. Mit anderen Worten handelt es sich um einen, beispielsweise mit Luft, aufblasbaren Lattenrost. Weiterhin gezeigt ist ein zweiter Hohlkörper 20 der zumindest abschnittsweise unterhalb der Decke 7 angeordnet ist, und welchem über eine an einem zweiten Anschlussstutzen 21 angeschlossene zweite Mediumzuführvorrichtung 22 ein zweites Medium zugeführt oder entzogen werden kann. Auf der zumindest einen Latte 13 ist ein dritter Hohlkörper 30 angeordnet, welchem über einen dritten Anschlussstutzen 31 ein drittes Medium durch eine dritte Mediumzuführvorrichtung 32 zugeführt oder entzogen werden kann. Mit anderen Worten handelt es sich um eine, beispielsweise mit Luft, aufblasbare Matratze, sprich eine Luftmatratze. Das Aufstelldach 1 weist eine Decke 7 auf, welche im hier dargestellten Schlafmodus 300 zusammen mit der nicht gezeigten vorderen Wand 3 und der nicht gezeigten hinteren Wand 6, sowie insbesondere mit der linken Wand 4 (in Fahrtrichtung), der rechten Wand 5 (in Fahrtrichtung), sowie insbesondere dem unmittelbar oberhalb des Dachs 111 befindlichen Boden 2, ein innenliegendes Schlafraumvolumen 8 begrenzt, welches Platz zum Nächtigen für zumindest eine Person zur Verfügung stellt. Die erste, zweite und/oder dritte Mediumzuführvorrichtung 12, 22, 32 kann sich außerhalb des Aufstelldachs 1 befinden, beispielsweise im Innenraum 112 des Fahrzeugs, um vorzugsweise durch dessen Bordnetz betreibbar zu sein bzw. in dieses integriert zu sein, oder auch außerhalb von diesem. Es kann auch vorgesehen sein, dass jeweils für zwei oder alle drei Hohlkörper jeweils eine gemeinsame bzw. die gleiche erste, zweite bzw. dritte Mediumzuführvorrichtung 12, 22, 32 verwendet wird. Es ist zudem denkbar, dass der erste und zweite Hohlkörper kombiniert, mit anderen Worten als gemeinsamer Hohlkörper, ausgeführt sind. Auch ist es denkbar, dass der erste, zweite und dritte Hohlkörper kombiniert ausgeführt sind, und vorzugsweise miteinander verbunden sind, wodurch mit anderen Worten ein gemeinsamer Hohlkörper gebildet wird. Somit ergibt sich jeweils der Vorteil, dass eine gemeinsame Zuführung bzw. ein gemeinsamer Entzug eines gemeinsamen bzw. ersten, zweiten bzw. dritten Mediums erfolgen kann. Bei dem gemeinsamen bzw. ersten, zweiten und/oder dritten Medium handelt es sich bevorzugt um Luft.

Fig. 8 zeigt ein Aufstelldach 1 für ein Fahrzeug 100. Bei Fig. 8 handelt es sich im Wesentlichen um das in Fig. 7 abgebildete Aufstelldach 1, jedoch vorliegend im Fahrmodus 200, und insbesondere zusammengefaltet bzw. zusammengeklappt. Dies ist erzielbar, wenn dem gemeinsamen, ersten, zweiten und/oder dritten Hohlkörper im Wesentlichen vollständig das gemeinsame, erste, zweite und/oder dritte Medium entzogen wird, und diese somit im Wesentlichen planar und platzsparend oberhalb des Dachs 111 angeordnet sind. Der Lattenrost 13 bzw. die zumindest eine Latte 13 befindet sich in Fahrhöhe. Die rechte Wand 5 und die linke Wand 4 sind dabei zusammengefaltet und vorzugsweise unterhalb der Decke 7 angeordnet, wobei insbesondere auch der erste, zweite und dritte Hohlkörper sowie die zumindest eine Latte 13 unterhalb der Decke 7 angeordnet sind und dadurch vor äußeren Umwelteinflüssen wie Regen oder Feuchtigkeit geschützt sind. Es kann vorgesehen sein, dass der Rand der Decke 7 im Wesentlichen bündig mit dem Dach 111 abschließt, vorzugsweise über eine nicht abgebildete Dichtung, welche bevorzugt entlang des Rands auf der nach unten weisenden Seite der Decke 7 oder auf der nach oben weisenden Seite des Dachs 111 verläuft. Im Fahrmodus 200 ist die Bauhöhe 113 des Aufstelldachs 1 im Wesentlichen minimiert, wodurch vorzugsweise der Abstand zwischen dem obersten Ende des Aufstelldachs, insbesondere des oberen Endes der Decke 7, einen minimalen senkrechten Abstand vom Dach 111 des Fahrzeugs 100 einnimmt. Dadurch können der Luftwiderstand bzw. die Bauhöhe 113 des Aufstelldachs 1 und/oder des Fahrzeugs 100 minimiert werden.

### Bezugszeichenliste

- 1: Aufstelldach
- 2: Boden
- 3: vordere Wand
- 4: linke Wand
- 5: rechte Wand
- 6: hintere Wand
- 7: Decke
- 8: Schlafraumvolumen

- 10: erster Hohlkörper
- 11: erster Anschlussstutzen
- 12: erste Mediumzuführvorrichtung
- 13: Latte, Lattenrost

- 20: zweiter Hohlkörper
- 21: zweiter Anschlussstutzen
- 22: zweite Mediumzuführvorrichtung
- 23: Antriebsmittel
- 24: Scherenscharnier
- 25: Dämpfer

- 30: dritter Hohlkörper
- 31: dritter Anschlussstutzen
- 32: dritte Mediumzuführvorrichtung

- 100: Fahrzeug

- 101: x-Achse
- 102: y-Achse
- 103: z-Achse

- 111: Dach
- 112: Innenraum
- 113: Bauhöhe
- 114: Windabweiser
- 115: Öffnung

- 200: Fahrmodus
- 300: Schlafmodus

## Patentansprüche

1. Aufstelldach (1) für ein Fahrzeug (100) oder einen Anhänger, insbesondere für ein Wohnmobil oder einen Campingwagen,
**dadurch gekennzeichnet, dass**
das Aufstelldach (1) einen Boden, (2) und zumindest drei an dem Boden (2) anordbare Wände (3,4,5,6) aufweist, und
das Aufstelldach (1) eine Decke (7) aufweist, welche an den zumindest drei Wänden anordbar ist,
wobei das Aufstelldach (1) reversibel durch ein Antriebsmittel (23) zumindest teilweise von einem Fahrmodus (200) in einen Schlafmodus (300) und umgekehrt von dem Fahrmodus (200) in den Schlafmodus (300) bringbar ist,
wobei im Schlafmodus (300) die Decke (7), der Boden (2) und die zumindest drei Wände (3,4,5,6) ein innenliegendes Schlafraumvolumen (8) bilden, welches einen Innenraum (112) des Fahrzeugs (100) oder Anhängers erweitert, insbesondere um Raum für eine Schlafgelegenheit wie ein Bett für zumindest eine Person zur Verfügung zu stellen, wobei im Fahrmodus (200) die Decke (7) und der Boden (2) im Wesentlichen aneinander angrenzen, um die Bauhöhe (113) des Aufstelldachs (1) zu minimieren.

2. Aufstelldach (1) für ein Fahrzeug (100) oder einen Anhänger, insbesondere für ein Wohnmobil oder einen Campingwagen, gemäß Anspruch 1,
**dadurch gekennzeichnet, dass**
das Aufstelldach (1) einen Lattenrost aufweist, welcher im Fahrmodus (200) im Wesentlichen parallel zum Boden (2) in einer Fahrhöhe im Wesentlichen nahe dem Boden (2) positionierbar ist und im Schlafmodus (300) im Wesentlichen parallel beabstandet vom Boden (2) oberhalb des Bodens (2) in einer Schlafhöhe positionierbar ist,
wobei die Schlafhöhe zwischen der Fahrhöhe und einer maximalen Lattenrosthöhe durch einen ersten Hohlkörper einstellbar ist,
wobei vorzugsweise der erste Hohlkörper im Wesentlichen mediumdicht verschlossen ist, und insbesondere das Volumen des ersten Hohlkörpers reversibel verkleinert und vergrößert werden kann, indem ein erstes Medium, vorzugsweise Luft, über einen am ersten Hohlkörper anordbaren ersten Anschlussstutzen
zur Vergrößerung des Volumens durch eine erste Mediumzuführvorrichtung, (12) insbesondere eine Pumpe, in den ersten Hohlkörper eingeführt werden kann, wodurch der Lattenrost nach oben anhebbbar ist, und
zur Verkleinerung des Volumens durch die erste Mediumzuführvorrichtung (12) dem ersten Hohlkörper entzogen werden kann, wodurch der Lattenrost nach unten absenkbar ist,
wobei insbesondere der erste Hohlkörper zumindest abschnittsweise zwischen dem Rand des Lattenrosts und dem Dach (111) des Fahrzeugs (100) oder Anhängers anordbar ist.

3. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
das Antriebsmittel (23) einen zweiten Hohlkörper aufweist, wobei der zweite Hohlkörper im Wesentlichen mediumdicht verschlossen ist, und das Volumen des zweiten Hohlkörpers reversibel verkleinert und vergrößert werden kann, indem ein zweites Medium, vorzugsweise Luft, insbesondere über einen am zweiten Hohlkörper anordbaren zweiten Anschlussstutzen
zur Vergrößerung des Volumens durch eine zweite Mediumzuführvorrichtung (22) in den zweiten Hohlkörper eingeführt werden kann und aufgrund von dessen Ausdehnung das Aufstelldach (1) zumindest teilweise in den Schlafmodus (300) bringbar ist, und
zur Verkleinerung des Volumens durch die zweite Mediumzuführvorrichtung (22) dem zweiten Hohlkörper entzogen werden kann und aufgrund von dessen Zusammenfaltung das Aufstelldach (1) zumindest teilweise in den Fahrmodus (200) bringbar ist,
wobei der zweite Hohlkörper zumindest abschnittsweise zwischen dem Randbereich der Decke (7) und dem Dach (111) des Fahrzeugs (100) oder Anhängers anordbar ist.

4. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
das Aufstelldach (1) zumindest ein Scherenscharnier (24) aufweist, insbesondere um das Aufstelldach (1) robust zumindest teilweise von dem Fahrmodus (200) in den Schlafmodus (300) zu führen, zumindest teilweise von dem Fahrmodus (200) in den Schlafmodus (300) zu führen, und/oder in dem Fahrmodus (200) oder Schlafmodus (300) zu halten, wobei vorzugsweise zwei Scherenscharniere (24) vorgesehen sind und sich ein erstes Scherenscharnier (24) in Fahrtrichtung rechts und ein zweites Scherenscharnier (24) in Fahrtrichtung links befindet.

5. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
das Aufstelldach (1) zumindest einen Dämpfer (25) aufweist, insbesondere um das Aufstelldach (1) kontrolliert zumindest teilweise von dem Fahrmodus (200) in den Schlafmodus (300) zu bringen oder von dem Fahrmodus (200) in den Schlafmodus (300),
wobei vorzugsweise zwei Dämpfer (25) vorgesehen sind und sich ein erster Dämpfer (25) in Fahrtrichtung rechts und ein zweiter Dämpfer (25) in Fahrtrichtung links befindet, wobei der Dämpfer (25) vorzugsweise einen Reibdämpfer oder fluiddynamischen Dämpfer (25) umfasst.

6. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
das Aufstelldach (1) einen dritten Hohlkörper aufweist, insbesondere eine Luftmatratze, wobei vorzugsweise der dritte Hohlkörper auf dem Lattenrost anordbar ist,
wobei der dritte Hohlkörper im Wesentlichen mediumdicht verschlossen ist, und insbesondere das Volumen des dritten Hohlkörpers reversibel verkleinert und vergrößert werden kann, indem ein drittes Medium, vorzugsweise Luft, über einen am dritten Hohlkörper anordbaren dritten Anschlussstutzen
zur Vergrößerung des Volumens durch eine dritte Mediumzuführvorrichtung (32) in den dritten Hohlkörper eingeführt werden kann und aufgrund von dessen Ausdehnung dieser zumindest teilweise in den Schlafmodus (300) bringbar ist, in welchem der dritte Hohlkörper im Wesentlichen zumindest teilweise von dem dritten Medium gefüllt ist, und
zur Verkleinerung des Volumens durch die dritte Mediumzuführvorrichtung (32) dem dritten Hohlkörper entzogen werden kann um diesen aufgrund von dessen Zusammenfaltung zumindest teilweise in den Fahrmodus (200) zu bringen, in welchem der dritte Hohlkörper im Wesentlichen kein drittes Medium enthält.

7. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
die Decke (7) und/oder die zumindest drei Wände (3,4,5,6) eine nach außen weisende Oberfläche aufweisen, welche insbesondere isolierend, blickdicht, stabilisierend und/oder mediumdicht ist.

8. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
das erste, zweite und/oder dritte Medium eine Flüssigkeit, und/oder ein Gas aufweist, wobei die Flüssigkeit vorzugsweise Wasser, insbesondere mit einem Gefrierschutzmittel, umfasst, wobei das Gas vorteilhafterweise Luft umfasst.

9. Aufstelldach (1) für ein Fahrzeug (100) oder einen Anhänger, insbesondere für ein Wohnmobil oder einen Campingwagen, gemäß einem der vorhergehenden Ansprüche, **dadurch gekennzeichnet, dass**
der erste, zweite und/oder dritte Hohlkörper zumindest eine Schicht aufweist, welche vorzugsweise einen Kunststoff aufweisen wie PVC und/oder TPU umfasst,
oder
dass der erste, zweite und/oder dritte Hohlkörper zumindest eine innere Schicht aufweist und eine äußere Schicht aufweist, wobei die innere und die äußere Schicht untrennbar miteinander, insbesondere per Vulkanisierung, verbunden sind, wobei die innere Schicht einen Kunststoff aufweist, vorteilhafterweise Gummi, und die äußere Schicht ein gegen Verschleiß widerstandsfähiges Material aufweist, vorteilhafterweise einen gewobenen Mantel aus Polyesterfasern, oder ein Drop-Stitch Material.

10. Fahrzeug (100) oder Anhänger, insbesondere Wohnmobil oder Campingwagen, mit einem Aufstelldach (1) gemäß einem der Ansprüche 1 bis 9,
wobei das Aufstelldach (1) auf dem Dach (111) des Fahrzeugs (100) oder des Anhängers positionierbar ist,
wobei vorzugsweise das Dach (111) des Fahrzeugs (100) oder des Anhängers zumindest teilweise als Boden (2) für das Aufstelldach (1) dient.

11. Fahrzeug (100) oder Anhänger, insbesondere Wohnmobil oder Campingwagen, nach Anspruch 10,
**dadurch gekennzeichnet, dass**
das Dach (111) eine Öffnung (115) aufweist, welche das Aufstelldach (1) mit einem Innenraum (112) des Fahrzeugs (100) oder des Anhängers verbindet, und insbesondere zumindest einer Person ermöglicht im Schlafmodus (300) das innenliegende Schlafraumvolumen (8) des Aufstelldachs (1) zu betreten oder zu verlassen.

12. Fahrzeug (100) oder Anhänger, insbesondere Wohnmobil oder Campingwagen, nach einem der Ansprüche 10 bis 11,
**dadurch gekennzeichnet, dass**
das Aufstelldach (1) im Wesentlichen hinter einem Windabweiser (114) des Fahrzeugs (100) oder Anhängers anordbar ist, insbesondere um den Luftwiderstand zu minimeren.

13. Verfahren zur Benutzung eines Aufstelldachs (1) für ein Fahrzeug (100) oder einen Anhänger, insbesondere für ein Wohnmobil oder einen Campingwagen, insbesondere gemäß einem der Ansprüche 1 bis 9.

14. Verfahren gemäß Anspruch 13, umfassend zumindest einen der folgenden Schritte:
• Bereitstellen eines Aufstelldachs (1), umfassend einen Boden, (2) und zumindest drei an dem Boden (2) anordbare Wände, und eine Decke, (7) welche an den zumindest drei Wänden (3,4,5,6) anordbar ist,
• wobei sich das Aufstelldach (1) anfänglich in einem Fahrmodus (200) befindet, wobei im Fahrmodus (200) die Decke (7) und der Boden (2) im Wesentlichen aneinander angrenzen um die Bauhöhe (113) des Aufstelldachs (1) zu minimieren
• Aktivierung eines Antriebmittels
• Betätigung des Antriebmittels, um das Aufstelldach (1) zumindest teilweise, vorzugsweise vollständig, von dem Fahrmodus (200) reversibel in einen Schlafmodus (300) zu bringen
• wobei im Schlafmodus (300) die Decke, (7) der Boden (2) und die zumindest drei Wände (3,4,5,6) ein innenliegendes Schlafraumvolumen (8) bilden, welches einen Innenraum (112) des Fahrzeugs (100) oder Anhängers erweitert, insbesondere um Raum für eine Schlafgelegenheit wie ein Bett für zumindest eine Person zur Verfügung zu stellen.

15. Verfahren gemäß Anspruch 13 oder 14, umfassend zumindest einen der folgenden Schritte:
• Bereitstellen eines Aufstelldachs (1), umfassend einen Boden, (2) und zumindest drei an dem Boden (2) anordbare Wände, und eine Decke, (7) welche an den zumindest drei Wänden (3,4,5,6) anordbar ist,
• wobei sich das Aufstelldach (1) anfänglich in einem Schlafmodus (300) befindet, wobei im Schlafmodus (300) die Decke, (7) der Boden (2) und die zumindest drei Wände (3,4,5,6) ein innenliegendes Schlafraumvolumen (8) bilden, welches einen Innenraum (112) des Fahrzeugs (100) oder Anhängers erweitert, insbesondere um Raum für eine Schlafgelegenheit wie ein Bett für zumindest eine Person zur Verfügung zu stellen
• Aktivierung eines Antriebmittels
• Betätigung des Antriebmittels, um das Aufstelldach (1) zumindest teilweise, vorzugsweise vollständig, von einem Schlafmodus (300) in einen Fahrmodus (200) zu bringen
• wobei im Fahrmodus (200) die Decke (7) und der Boden (2) im Wesentlichen aneinander angrenzen um die Bauhöhe (113) des Aufstelldachs (1) zu minimieren.
